# EUROPEAN PATENT APPLICATION

(11) **EP 4 786 551 A1**
(43) Date of publication of application: **05.08.2026**
(21) Application number: 25155144.6
(22) Date of filing: 31.01.2025
(51) Int. Cl.: C09D 15/00, C09D 7/63, C09D 4/00, C09D 191/00, B05D 7/06

(54) **HIGH-SOLIDS TRIGLYCERIDE OIL BASED WOOD COATING COMPOSITIONS**

(71) Applicant: Muylle-Facon, 8870 Izegem (BE)
(72) Inventor: VANDERHEIJDEN, Sam, 8530 Harelbeke (BE); PAUWELYN, Sebastiaan, 8870 Kachtem (BE)
(74) Representative: Gevers Patents

(57) **Abstract**

The present invention relates to an improved high-solids wood coating composition wherein said high-solids wood coating composition comprises, relative to the total weight of said high-solids wood coating composition, from 60.00 to 99.00 weight percentage of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds; from 0.01 to 2.00 weight percentage of at least one metal-based drying agent; from 0.50 to 10.00 wt. % of at least one acylphosphine oxide photoinitiator; at least one α-hydroxyalkylphenone photoinitiator according to general Formula (I_{P2}) or according to general Formula (II_{P2}), wherein the at least one α-hydroxyalkylphenone photoinitiator is present in an amount as determined by a weight ratio of the at least one α-hydroxyalkylphenone photoinitiator to at the least one acylphosphine oxide photoinitiator ranging from 0.5 to 10.0; equal to or less than 5.00 wt. % of at least one radically polymerizable (meth)acrylic-functionalized compound different from the compound (P1); and wherein said high-solids wood coating composition has a total solids content equal to or greater than 90.00 wt. %, relative to the total weight of said high-solids wood coating composition, and wherein the total solids content of said high-solids wood coating composition is measured according to the standard ASTM D2369 - 20.

## Description

### FIELD OF THE INVENTION

The present invention relates to environmentally friendly high-solids triglyceride oil based wood coating compositions for the preservation and the protection of wood products, said high-solids triglyceride oil based wood coating compositions being visible light-hardenable or -curable through photoassisted oxypolymerization, and said high-solids triglyceride oil based wood coating compositions providing a rapid hardness build-up while at least maintaining good film formation properties, i.e. without jeopardizing or impairing film formation, and mechanical properties in terms of hardness, of the resulting coated layers when wood products are treated with the wood coating compositions, and which do not require the combinatorial use of one or more isocyanate-based accelerators. The invention further relates to methods for manufacturing of the same, to methods for treating wood products wherein said wood products are treated with the high-solids triglyceride oil based wood coating compositions, to coated layers obtained by said methods for treating wood products wherein said wood products are treated with the high-solids triglyceride oil based wood coating compositions.

### BACKGROUND OF THE INVENTION

Wood, as a natural hybrid composite material made of biopolymers such as cellulose, lignin and hemicelluloses, represents a versatile and widely exploited renewable resource for indoor and outdoor applications such as building, construction, and living. It has been used by mankind since thousands of years. Even today wooden furniture, floorings and articles of daily use experience great popularity. Wood provides high versatility and stability in combination with excellent workability, but, on the other hand, wood is sensitive to external influences such as dirt pickup, abrasion, humidity, temperature variations, or germs. For instance, solid hardwood flooring and engineered wood flooring have long been a highly desirable house feature in the sense of warmth, tradition, and durability. However, hardwood floors are particularly prone to damage from accumulated foot traffic, wear and tear, and moisture. Therefore, for many years, wood coating compositions are applied to hardwood floors in order to preserve and protect the wood from deterioration, scratches, spills and stains, moisture, and the wear and tear caused by foot traffic, while maximizing, when desired, the appearance of the hardwood floors. Nowadays, many different wood coating compositions for solid hardwood floorings and engineered wood floorings exist, each of those wood coating compositions thereby demonstrating one or more of the properties such as dirt pickup resistance, water repellency, abrasion resistance, scratch resistance, matting, antiblocking, and slip resistance. Whereupon each wood coating has to meet individual requirements depending on the use of the wood product. This confronts wood coating formulators consistently with new challenges.

A wide range of wood coating compositions are currently available on the market under a variety of names including varnish, lacquer, wood oil, hardwax oil, wood stain, Danish oil, trim paint, wood finish, etc. In general, these wood coating compositions are typically categorized into three different types of wood coating compositions based on the presence or the type of solvent used to formulate said wood coating compositions. In this context, a distinction can be made between i) waterborne wood coating compositions, ii) organic solvent based wood coating compositions, and iii) high-solids wood coating compositions that are essentially free of volatile content, i.e. these latter wood coating compositions are essentially free of water and one or more organic solvents.

Waterborne wood coating compositions are aqueous emulsions or aqueous dispersions of one or more of, for example, acrylic polymers, polyurethanes, alkyd resins, drying oils, etc. These waterborne wood coating compositions may contain more than 30 % by weight of water, and often as much as 70 % by weight of water. In this respect, reference can be made to the two-component coating composition system as disclosed in WO 2019/004922 A1, said coating composition system containing a second coating composition comprising a waterborne dispersion comprising polyurethanes, polyacrylates, and polyurethane-acrylate hybrids. Reference may also be made to the disclosure of WO 2006/109432 A1, which relates to a two-component curable aqueous composition comprising an aqueous emulsion of a polyurethane alkyd resin. Depending on the chemical formulation, waterborne wood coating compositions are characterized by a wide range of different technical properties, in particular technical properties such as appearance, feel, mechanical and/or chemical resistance, etc. However, due to the presence of significant amounts of water, the application of waterborne coating compositions to water-sensitive wood types or wood species may result in undesirable grain raising (water popping or grain-popping). Grain raising, i.e. the lifting of wood fibers individually or in bundles when water is applied to wood surfaces, is one reason why some companies are (more) reluctant to finish wood products with waterborne coatings. Indeed, wood grain raising is an important issue associated with the use of water-based stains. When a waterborne wood coating composition is used to coat wood surfaces, fibers may stick up or protrude from the wood, causing a dull appearance and a rough surface of the paint finish. It is mainly caused by the swelling of the wood fibers due to the absorption of water. Therefore, after applying a waterborne wood coating composition to a wood surface, additional processing steps such as sanding are often required to achieve a smooth wood surface after coating. Oak, a popular choice for solid hardwood flooring, is particularly susceptible or prone to grain raising when being coated with waterborne wood coating compositions.

Organic solvent based wood coating compositions contain binder resins, such as alkyd resins. These organic solvent based wood coating compositions contain at least 10 % by weight of one or more organic solvents, and often as much as 40 % by weight of one or more organic solvents. As organic solvent based wood coating compositions do not contain water, they do not cause grain raising when applied to wood products to coat wood surfaces. Although organic solvent based wood coating compositions are still widely used today, they are under increasing pressure due to health, safety, and environmental issues and perspectives associated with the use of significant amounts of organic solvents. Indeed, organic solvent evaporation makes a large contribution to the emission of volatile organic compounds (VOC) during the physical drying of organic solvent based coatings.

High-solids wood coating compositions are essentially free of volatile content, i.e. these wood coating compositions are essentially free of water and one or more organic solvents, such as often less than 5 % by weight and typically less than 0.5% by weight of volatile content. The emission of volatile organic compounds (VOC) as a source of urban air pollution can be greatly decreased by using solvent-free polymerizable resins. As there is no physical evaporation of water or organic solvents when applied to wood surfaces, the final mechanical properties of the resulting coatings depend solely on the occurrence of chemical crosslinking at room temperature after application. In addition, as there is no dilution through the presence of water or organic solvents, the reactive components of these high-solids wood coating compositions must be of sufficiently low viscosity to allow application. Well-known and one of the oldest examples of such high-solids wood coating compositions are naturally occurring unsaturated triglyceride drying oils, such as linseed oil or tung oil, which have been used for coating applications since prehistoric times. These unsaturated triglyceride drying oils are known to chemically crosslink in the presence of and by reaction with atmospheric oxygen to form a solid coated layer. Triglyceride drying oils such as linseed oil, tung oil, or poppy seed oil, are highly unsaturated and polymerize when exposed to molecular oxygen through a free-radical chain mechanism known as autoxidation. Autoxidation follows a free radical chain mechanism, which includes lipid radical formation (initiation) and propagation through their reaction with oxygen to form lipid peroxyl radicals which can abstract hydrogen atoms from lipids, regenerating a lipid radical. Ultimately, termination of the process occurs through radial-radical reactions resulting in crosslinking. At room temperature, the autoxidation reaction of drying oils often occurs in the presence of one or more added metal-based drying agents or driers which increase the reaction rate by reducing the activation energy. Therefore, the degree of unsaturation in the fatty acid residues of triglyceride seed oil based wood compositions is critical to the autoxidative drying or crosslinking process.

Although these triglyceride seed oil based wood coating compositions have thus been used for centuries for application to wood products, particularly as protective coatings or finishes for hardwood floorings, with the rise of modern chemistry they have been largely replaced as the primary means of wood protection by organic solvent based alkyd resins due to their superior mechanical properties (such as hardness), faster drying or curing, and better dirt pickup resistance. As alkyd resins are generally characterized by viscosities that are too high to be applied to wood products by conventional coating methods such as a polishing machine, roller or brush, significant amounts of one or more organic solvents are required to achieve a workable viscosity. Although organic solvent based wood coating compositions containing alkyd resins are still popular today for coating wood products, particularly hardwood floorings, there has been a significant move away from solvent based wood coating compositions over the last two decades due to health, safety, and environmental concerns. Some manufacturers then turned their attention to waterborne wood coating compositions containing aqueous emulsions or aqueous dispersions of one or more synthetic resins. Although these waterborne wood coating compositions can be tuned for good mechanical properties when applied to wood products, the resulting waterborne finishes suffer from grain raising, as described above, and short open time and sensitivity to overlap, making them more difficult to apply than organic solvent based wood coating compositions.

In recent decades, triglyceride seed oil based wood coating compositions have regained popularity due to their bio(mass)-based and renewable properties to counteract the above-described negative aspects associated with organic solvent based wood coating compositions and the specific disadvantages and difficulties of waterborne wood coating compositions. In particular, for coating hardwood floorings two-component triglyceride seed oil based wood coating compositions have been developed. These two-component triglyceride seed oil based wood coating compositions remain by far the most popular hardwood floor coating that is formatted with triglyceride drying oils as the main component on the market today. They consist of a first A component based on a triglyceride drying seed oil and a second B component based on an aliphatic polyisocyanate, such as trimers of hexamethylene diisocyanate. Mixing the A and B components prior to application to wood products significantly reduces curing times, thereby resulting in a durable wood coating that can often be applied to wood surfaces, in particular hardwood floorings, in a single layer. Although the combinatorial use of isocyanate-based accelerators in the application of wood coating compositions is still widely used today, it is expected that the use of isocyanates will no longer be the way to go in the (near) future due to the health, safety, and environmental issues and perspectives and increasing regulatory pressure associated with the use of isocyanates.

These challenges associated with crosslinking/curing/hardening speed of triglyceride seed oil based wood coating compositions, such as the naturally occurring unsaturated triglyceride drying oils linseed oil and tung oil, have been addressed in literature. In this respect, reference can for example be made to the disclosure of Dan Zhang et al. Coatings 2024, 14, 2., said disclosure describing the effect of acylphosphine oxide photoinitiators on the curing behavior and the photopolymerization of ultraviolet(UV)-curable wood wax oil coating compositions containing tung oil and beeswax as the primary raw materials in further presence of ethyl(2,4,6-trimethylbenzoyl)phenylphosphinate (TPO-L; CAS 84434-11-7) as acylphosphine oxide photoinitiator. UV irradiation experiments using a UV curing machine and coating quality tests were used to investigate the effects of incorporating incremental amounts of TPO-L photoinitiator on properties such as surface drying time (see Figure 3), in particular the shortening thereof, of wood samples treated with the ultraviolet(UV)-curable wood wax oil coating compositions.

Similar observations for the incorporation of acylphosphine oxide photoinitiators in curable wood coating compositions for the purpose of shortening their drying time have also been described for solventborne alkyd resins as organic solvent based wood coating compositions. In this respect, reference can be made to the disclosure of Ye G. et al. Progress in Organic Coatings 2012, 73, 366 - 373, said disclosure describing a three-component drying system for photoassisted oxypolymerization of soybean oil alkyd resins containing i. a cobalt (Co) drier catalyst; ii. a singlet oxygen photosensitizer; and iii. bis(2,4,6-trimethylbenzoyl)phenylphosphine oxide (BAPO; CAS 162881-26-7) as a cleavable acylphosphine oxide photoinitiating radical generator. Visible light irradiation experiments were used to investigate the (reaction pathways and kinetics of the) photoassisted drying of the three-component drying system, thereby resulting in crosslinking of the polymeric network. Reference may also be made to the disclosure of Ryan R. Salata et al. Progress in Organic Coatings 2020, 144, 105672, said disclosure describing solventborne visible light-curable linseed oil alkyds having fast curing rates at ambient conditions using exposure to indoor lighting. In particular, the disclosed solventborne visible light-curable linseed oil alkyds contain i. a medium oil alkyd from linseed oil; ii. a mixture of iron (Fe), zirconium (Zr), and calcium (Ca) driers; iii. an organic solvent mixture of acetone and methyl ethyl ketone (MEK) to reduce the application viscosity; and iv. bis(2,4,6-trimethylbenzoyl)phenylphosphine oxide (BAPO; CAS 162881-26-7) as a cleavable acylphosphine oxide photoinitiating radical generator. The authors conclude that the unsaturated fatty acids of alkyds use a natural radical autoxidative drying or crosslinking mechanism that can be enhanced by the addition of photoinitiators activated in the visible range (see Table 7), thereby resulting in visible light-curable alkyds that exhibit accelerated drying and autoxidation at ambient conditions, thereby promoting efficient crosslinking, especially when compared to traditional acrylate-based UV-curable coatings that require exposure to UV irradiation for curing.

In addition, ultraviolet(UV)-curable waterborne wood coating compositions being aqueous emulsions or aqueous dispersions of acrylic polymers and polyurethane-acrylate hybrids having polymerizable (meth)acrylate functionalities generally and typically require exposure to UV irradiation for curing and crosslinking, thereby making effective manual application cumbersome when applied to wood products to coat wood surfaces.

Therefore, it is expected that there will be a strong market demand for environmentally friendly and easy to apply visible light-hardenable or -curable through photoassisted oxypolymerization high-solids triglyceride seed oil based wood coating compositions providing a rapid hardness build-up while at least maintaining good film formation properties, i.e. without jeopardizing or impairing film formation, and mechanical properties in terms of hardness, of the resulting coated layers when wood products are treated with the wood coating compositions, and which do not require the combinatorial use of one or more isocyanate-based accelerators.

In view of all the above, there remains a continuous need for improved environmentally friendly and easy to apply high-solids triglyceride oil based wood coating compositions for the preservation and the protection of wood products, said high-solids triglyceride oil based wood coating compositions being visible light-hardenable or -curable through photoassisted oxypolymerization, and said high-solids triglyceride oil based wood coating compositions providing a rapid hardness build-up while at least maintaining good film formation properties, i.e. without jeopardizing or impairing film formation, and mechanical properties in terms of hardness upon application of said improved coating compositions to wood products and thereby resulting in coated layers of said improved coating compositions on said wood products, and which do not require the combinatorial use of one or more isocyanate-based accelerators.

### SUMMARY OF THE INVENTION

The inventors have now surprisingly found that it is possible to provide an improved environmentally friendly high-solids wood coating composition fulfilling the above-mentioned needs.
Thus, there is now provided a high-solids wood coating composition [composition (C), herein after] comprising, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds;
- from 0.01 to 2.00 wt. % of at least one metal-based drying agent;
- from 0.50 to 10.00 wt. % of at least one acylphosphine oxide photoinitiator [compound (P1), herein after]; and
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 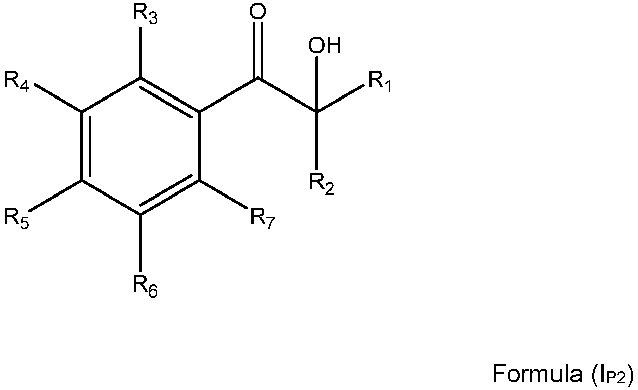 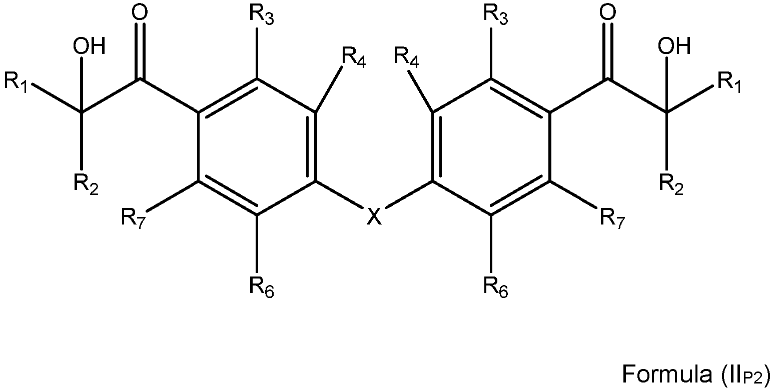
wherein
- each of X is independently selected from CH₂, or O;
- each of R₁, and R₂, equal to or different from each other and at each occurrence, is independently selected from C₁₋₄ alkyl; wherein R₁ and R₂ can together form a C₅₋₆ cycloalkyl;
- each of R₃, R₄, R₅, R₆, and R₇, equal to or different from each other and at each occurrence, is independently selected from the group consisting of hydrogen, C₁₋₄ alkyl, C₁₋₄ hydroxyalkyl, and ORs, and wherein R₈ is independently selected from the group consisting of hydrogen, C₁₋₄ alkyl, and C₁₋₄ hydroxyalkyl;
- equal to or less than 5.00 wt. % of at least one radically polymerizable (meth)acrylic-functionalized compound different from the compound (P1); and
wherein the composition (C) has a total solids content equal to or greater than 90.00 wt. %, relative to the total weight of the composition (C), and wherein the total solids content of the composition (C) is measured according to the standard ASTM D2369 - 20.

In another aspect, the present invention further provides a method for the manufacturing of the composition (C), as detailed above.

In another aspect, the present invention further provides a method for the treatment of a surface or at least part of a surface of a wood product wherein said wood product is treated with the composition (C), as detailed above.

In another aspect, the present invention further provides a coated layer obtained by the method for the treatment of the surface or at least part of the surface of the wood product wherein said wood product is treated with the composition (C), as detailed above.

### DETAILED DESCRIPTION

Within the context of the present invention, the term "comprising" should not be interpreted as being restricted to the means listed thereafter; it does not exclude other components, elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

Particularly when compared to the traditional (meth)acrylate-based ultraviolet(UV)-curable wood coatings which are known to those skilled in the art of wood coating compositions and which require exposure to UV irradiation for curing, the inventors have now surprisingly found that by using in the high-solids composition (C) of the present invention, as detailed above, a defined amount of a triglyceride oil composition, as detailed above, wherein the triglyceride oil composition comprises a defined amount of at least one fatty acid residue having at least three conjugated double bonds, as detailed above, in combination with a defined amount of at least one metal-based drying agent, as detailed above, a defined amount of at least one acylphosphine oxide photoinitiator, as detailed above, and a defined amount of at least one α-hydroxyalkylphenone photoinitiator, as detailed above, the defined amount of the at least one acylphosphine oxide photoinitiator now synergistically interacts with the defined amount of the at least one α-hydroxyalkylphenone photoinitiator, thereby resulting in an environmentally friendly and easy to apply high-solids composition (C) being visible light-hardenable or -curable through photoassisted oxypolymerization and now having a rapid hardness build-up while at least maintaining good film formation properties, i.e. without jeopardizing or impairing film formation, and good mechanical properties in terms of hardness upon application of said composition (C) to wood products and thereby resulting in coated layers of said composition (C) on said wood products, as demonstrated in the experimental section. In particular, in combination with a rapid hardness build-up and good film formation properties, the inventors have surprisingly found that when the high-solids composition (C) of the present invention is applied to wood products and thereby resulting in coated layers of said composition (C) on said wood products, a sufficiently high hardness can be readily obtained within a few days of application, or even after 24 hours of application, and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

In addition, the inventors have now surprisingly found that by using in the high-solids composition (C) of the present invention, as detailed above, the above-described synergistic interaction between the defined amount of the at least one acylphosphine oxide photoinitiator, as detailed above, and the defined amount of the at least one α-hydroxyalkylphenone photoinitiator, as detailed above, provides great technical advantages, even when the composition (C) is applied to wood products under sub-optimal autoxidative drying conditions, such as for instance at lower temperatures, at higher relative humidity levels, and/or when the composition (C) additionally comprises a high amount of at least one pigment. The inventors have now surprisingly found that the high-solids composition (C) of the present invention addresses these challenges and provides a solution for improved drying performance under various conditions.

Within the context of the present invention, the term "triglyceride oil composition" is intended to refer to a liquid unsaturated triglyceride fatty oil product from vegetable or animal origin or a combination of both, natural or synthetic, which will be oxidatively cross-linked and hardened/solidified by reaction with atmospheric oxygen.

In particular, the term "triglyceride oil composition" is intended to refer to the combination of all of triglycerides, diglycerides, and monoglycerides present in the composition (C) of the present invention. The triglyceride oil composition, as comprised in the composition (C), as detailed above, may comprise monoglycerides and/or diglycerides, but these, when present, will typically be present in substantially lower amounts or smaller quantities than the triglycerides. While the triglyceride oil composition is essentially consisting of glycerides, i.e. the combination of all of triglycerides, diglycerides, and monoglycerides, the triglyceride oil composition may possibly also comprise other components, such as free fatty acids, phospholipids, unsaponifiable matter, and glycerin.

The terms triglycerides, diglycerides, and monoglycerides are known terms to a person skilled in the art. Within the context of the present invention, the terms "triglycerides", "diglycerides", and "monoglycerides" respectively denote fatty acid esters of glycerol (i.e. 1,2,3-propanetriol), wherein three, two, or one hydroxyl groups of glycerol are esterified with three, two, or one fatty acids, while the remaining hydroxyl groups, if any, remain unsubstituted. In other words, the terms "triglycerides", "diglycerides", and "monoglycerides" respectively denote fatty acid esters of glycerol (i.e. 1,2,3-propanetriol), wherein three, two, or one hydroxyl groups of glycerol are replaced by three, two, or one fatty acid residues via esterification, while the remaining hydroxyl groups, if any, remain unsubstituted.

Within the context of the present invention, it is further understood that the term "triglyceride oil composition" as used herein excludes the use of one or more alkyd resins. Alkyd resins are known to those skilled in the art of wood coating compositions and denote polyesters obtained by subjecting a raw material composition to one or more polycondensation reactions (esterification and/or transesterification reactions), said raw material composition comprising i) at least one polycarboxylic acid component, such as orthophthalic acid or isophthalic acid or adipic acid, or the corresponding cyclic carboxylic anhydride of said at least one polycarboxylic acid component, such as phthalic anhydride; ii) at least one polyhydric alcohol or polyol component, such as glycerol, ethylene glycol, trimethylolpropane, sorbitol, or pentaerythritol; and iii) at least one monocarboxylic fatty acid component or the corresponding triglyceride of said monocarboxylic fatty acid component.

In certain embodiments of the composition (C) of the present invention, the triglyceride oil composition, as detailed above, comprises a total amount of monoglycerides and diglycerides of less than 15.00 wt. %, preferably less than 10.00 wt. %, more preferably less than 7.00 wt. %, even more preferably less than 5.00 wt. %, relative to the total weight of the triglyceride oil composition. Method ISO 18395:2005 is a suitable method for the quantitative determination of each of the glyceride types.

In certain embodiments of the composition (C) of the present invention, the triglyceride oil composition, as detailed above, comprises a total amount of free fatty acids of less than 5.00 wt. %, preferably less than 3.00 wt. %, more preferably less than 2.00 wt. %, even more preferably less than 1.50 wt. %, relative to the total weight of the triglyceride oil composition. Method ISO 18395:2005 is a suitable method for the quantitative determination of each of the glyceride types.

In certain embodiments of the composition (C) of the present invention, the triglyceride oil composition, as detailed above, comprises a total amount of triglycerides of greater than 80.00 wt. %, preferably greater than 87.00 wt. %, more preferably greater than 91.00 wt. %, even more preferably greater than 93.50 wt. %, relative to the total weight of the triglyceride oil composition. Method ISO 18395:2005 is a suitable method for the quantitative determination of each of the glyceride types.

As said, according to the present invention, the triglyceride oil composition, as detailed above and as comprised in the composition (C), comprises, relative to the total weight of all fatty acid residues in the triglyceride oil composition, from 30.00 to 85.00 wt. % of at least one fatty acid residue having at least three conjugated double bonds (wherein the three conjugated double bonds have the simplified formula -C=C-C=C-C=C-).

Preferably, the at least one fatty acid residue having at least three conjugated double bonds is further characterized by having from 16 to 24 carbon atoms. More preferably, the at least one fatty acid residue having at least three conjugated double bonds is further characterized by having from 16 to 20 carbon atoms.

Within the context of the present invention, the term "conjugated" in connection with a multiple unsaturation is known to a person skilled in the art of organic chemistry. The term refers to the presence of two or more carbon-carbon double bonds (i.e. C=C bonds) that are covalently linked to each other via a single carbon-carbon bond. In other words, both carbon atoms of a single covalent carbon-carbon bond are covalently attached to a further carbon atom through a double bond. A conjugated system, in its simplest form, can be depicted as -C=C-C=C-.

Within the context of the present invention, the expression "at least one fatty acid residue having at least three conjugated double bonds" is intended to denote one or more than one fatty acid residue having at least three conjugated double bonds. Mixtures of fatty acid residues having at least three conjugated double bonds can also be used for the purpose of the invention.

In the rest of the text, the expression "at least one fatty acid residue having at least three conjugated double bonds" is understood, for the purposes of the present invention, both in the plural and the singular form, that is to say the triglyceride oil composition, and hence the composition (C) of the present invention comprising said triglyceride oil composition, as detailed above, may comprise one or more than one fatty acid residue having at least three conjugated double bonds.

Within the context of the present invention, the expression "wherein the triglyceride oil composition comprises, relative to the total weight of all fatty acid residues in the triglyceride oil composition, from 30.00 to 85.00 wt. % of at least one fatty acid residue having at least three conjugated double bonds" refers either to the amount of fatty acid residue having at least three conjugated double bonds when the triglyceride oil composition comprises only one fatty acid residue having at least three conjugated double bonds, or to the sum of the amounts of fatty acid residues having at least three conjugated double bonds when the triglyceride oil composition comprises more than one fatty acid residue having at least three conjugated double bonds. This being said, it means that it is necessary that, when more than one fatty acid residue having at least three conjugated double bonds is present in the triglyceride oil composition, and hence in the composition (C) of the present invention comprising said triglyceride oil composition, as detailed above, then it is the sum of the amounts of each of said fatty acid residue having at least three conjugated double bonds that ranges from 30.00 to 85.00 wt. %, relative to the total weight of all fatty acid residues in the triglyceride oil composition.

Fatty acid residues, such as fatty acid residues having from 16 to 24 carbon atoms, or from 16 to 20 carbon atoms, having at least three conjugated double bonds are known in the art. Non-limiting examples of suitable fatty acid residues having at least three conjugated double bonds notably include fatty acid residues of α-eleostearic acid ((9*Z*,11*E*,13*E*)-octadeca-9,11,13-trienoic acid); β-eleostearic acid ((9*E*,11*E*,13*E*)-octadeca-9,11,13-trienoic acid); α-calendic acid ((8*E*,10*E*,12*Z*)-octadeca-8,10,12-trienoic acid); β-calendic acid ((8*E*,10*E*,12*E*)-octadeca-8,10,12-trienoic acid); punicic acid ((9*Z*,11*E*,13*Z*)-octadeca-9,11,13-trienoic acid); α-licanic acid (4-oxo-(9*Z*,11*E*,13*E*)-octadeca-9,11,13-trienoic acid or 4-oxo-α-eleostearic acid); jacaric acid ((8*Z*,10*E*,12*Z*)-octadeca-8,10,12-trienoic acid); catalpic acid ((9*E*,11*E*,13*Z*)-octadeca-9,11,13-trienoic acid); α-parinaric acid (9*Z*,11*E*,13*E*,15*Z*-octadeca-9,11,13,15-tetraenoic acid); and β-parinaric acid (9*E*,11*E*,13*E*,15*E*-octadeca-9,11,13,15-tetraenoic acid).

According to a preferred embodiment of the composition (C) of the present invention, the at least one fatty acid residue as comprised in the triglyceride oil composition, as detailed above, said at least one fatty acid residue having at least three conjugated double bonds, is a conjugated triene fatty acid residue, also known in the art, see for instance the introduction section of Takuji Tanaka et al. Int. J. Mol. Sci. 2011, 12, 7495 - 7509, via the synonymous designation conjugated trienoic fatty acid residue.

Conjugated triene fatty acid residues, or synonymously conjugated trienoic fatty acid residues, are known in the art. Non-limiting examples of suitable conjugated triene fatty acid residues for use in the triglyceride oil composition, as detailed above, notably include fatty acid residues of α-eleostearic acid ((9*Z*,11*E*,13*E*)-octadeca-9,11,13-trienoic acid); β-eleostearic acid ((9*E*,11*E*,13*E*)-octadeca-9,11,13-trienoic acid); α-calendic acid ((8*E*,10*E*,12*Z*)-octadeca-8,10,12-trienoic acid); β-calendic acid ((8*E*,10*E*,12*E*)-octadeca-8,10,12-trienoic acid); punicic acid ((9*Z*,11*E*,13*Z*)-octadeca-9,11,13-trienoic acid); α-licanic acid (4-oxo-(9*Z*,11*E*,13*E*)-octadeca-9,11,13-trienoic acid or 4-oxo-α-eleostearic acid); jacaric acid ((8*Z*,10*E*,12*Z*)-octadeca-8,10,12-trienoic acid); and catalpic acid ((9*E*,11*E*,13*Z*)-octadeca-9,11,13-trienoic acid).

According to a more preferred embodiment of the composition (C) of the present invention, the at least one fatty acid residue as comprised in the triglyceride oil composition, as detailed above, said at least one fatty acid residue having at least three conjugated double bonds, is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9Z,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9,11,13-trienoic acid); preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid); more preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12Z)-octadeca-8,10,12-trienoic acid), and β-calendic acid ((8*E*,10*E*,12*E*)-octadeca-8,10,12-trienoic acid); most preferably selected from fatty acid residues of α-eleostearic acid ((9*Z*,11*E*,13*E*)-octadeca-9,11,13-trienoic acid) or β-eleostearic acid ((9*E*,11*E*,13*E*)-octadeca-9,11,13-trienoic acid).

As said above, according to the present invention, in the composition (C), as detailed above, the amount of the at least one fatty acid residue having at least three conjugated double bonds as comprised in the triglyceride oil composition, as detailed above, is from 30.00 to 85.00 wt. %, relative to the total weight of all fatty acid residues in the triglyceride oil composition.

Advantageously, in the composition (C), as detailed above, the amount of the at least one fatty acid residue having at least three conjugated double bonds as comprised in the triglyceride oil composition, as detailed above, relative to the total weight of all fatty acid residues in the triglyceride oil composition, is equal to or greater than 40.00 wt. %, preferably equal to or greater than 45.00 wt. %, more preferably equal to or greater than 50.00 wt. %, even more preferably equal to or greater than 55.00 wt. %, yet even more preferably equal to or greater than 60.00 wt. %.

It is further understood that, in the composition (C), as detailed above, the upper limit of the amount of the at least one fatty acid residue having at least three conjugated double bonds as comprised in the triglyceride oil composition, as detailed above, relative to the total weight of all fatty acid residues in the triglyceride oil composition, is equal to or less than 80.00 wt. %, preferably equal to or less than 75.00 wt. %, more preferably equal to or less than 70.00 wt. %.

In a preferred embodiment of the composition (C) of the present invention, the at least one fatty acid residue having at least three conjugated double bonds, as detailed above, is present in the triglyceride oil composition, as detailed above and relative to the total weight of all fatty acid residues in the triglyceride oil composition, in an amount from 40.00 to 85.00 wt. %, preferably in an amount from 45.00 to 85.00 wt. %, more preferably in an amount from 50.00 to 85.00 wt. %, more preferably in an amount from 55.00 to 85.00 wt. %, more preferably in an amount from 60.00 to 85.00 wt. %, even more preferably in an amount from 60.00 to 80.00 wt. %, yet even more preferably in an amount from 60.00 to 75.00 wt. %, most preferably in an amount from 60.00 to 70.00 wt. %.

As said, according to the present invention, the triglyceride oil composition, as detailed above and as comprised in the composition (C), further comprises, relative to the total weight of all fatty acid residues in the triglyceride oil composition, equal to or less than 15.00 wt. % of saturated fatty acid residues (SAFA), such as saturated fatty acid residues having from 6 to 24 carbon atoms, in particular said upper limit serving the purpose of providing the composition (C) of the present invention with a sufficiently high liquidity, sufficiently high drying properties and a sufficiently high hardness upon application of said composition (C) to wood products and thereby resulting in coated layers of said composition (C) on said wood products, as demonstrated in the experimental section.

Saturated fatty acid residues, such as saturated fatty acid residues having from 6 to 24 carbon atoms, are known in the art. Non-limiting examples of saturated fatty acids having from 6 to 24 carbon atoms are hexadecanoic acid or its synonym palmitic acid, and octadecanoic acid or its synonym stearic acid.

In a preferred embodiment of the composition (C) of the present invention, the triglyceride oil composition, as detailed above and as comprised in the composition (C), further comprises, relative to the total weight of all fatty acid residues in the triglyceride oil composition, equal to or less than 12.50 wt. % of saturated fatty acid residues (SAFA), preferably equal to or less than 10.00 wt. % of saturated fatty acid residues (SAFA), more preferably equal to or less than 8.50 wt. % of saturated fatty acid residues (SAFA).

According to a preferred embodiment of the composition (C) of the present invention, the triglyceride oil composition, said triglyceride oil composition comprising at least one fatty acid residue having at least three conjugated double bonds, as detailed above, comprises at least one first drying oil, said at least one first drying oil comprising the at least one fatty acid residue having at least three conjugated double bonds, as detailed above, and wherein the at least one first drying oil is selected from the group consisting of tung oil, calendula seed oil, bitter gourd seed oil, pomegranate seed oil, and oiticica oil. Preferably, the at least one first drying oil is selected from the group consisting of tung oil, calendula seed oil, pomegranate seed oil, and oiticica oil. More preferably, the at least one first drying oil is selected from tung oil, or calendula seed oil. Most preferably, the at least one first drying oil is tung oil.

Within the context of the present invention, the expression "at least one first drying oil" is intended to denote one or more than one first drying oil. Mixtures of first drying oils, as detailed above, can also be used for the purpose of the invention.

In the rest of the text, the expression "at least one first drying oil" is understood, for the purposes of the present invention, both in the plural and the singular form, that is to say the triglyceride oil composition, and hence the composition (C) of the present invention comprising said triglyceride oil composition, as detailed above, may comprise one or more than one first drying oil, as detailed above.

Within the context of the present invention, it is understood that the person skilled in the art can determine and select according to standard practice in the art a suitable amount of the at least one first drying oil, as detailed above, in such a way that the requirements for the triglyceride oil composition, as comprised in the composition (C) and as detailed above, in terms of the amount of the at least one fatty acid residue having at least three conjugated double bonds and in terms of the (upper limit) amount of the saturated fatty acid residues (SAFA), as detailed above and relative to the total weight of all fatty acid residues in the triglyceride oil composition, are complied with. For this purpose, it is submitted that it is according to the common general knowledge of the person skilled in the art that the at least one first drying oil, as detailed above, and furthermore depending on the nature and the origin of the at least one first drying oil, comprises, relative to the total weight of all fatty acid residues in the at least one first drying oil, a certain weight range of the at least one fatty acid residue having at least three conjugated double bonds and a certain weight range of saturated fatty acid residues (SAFA), as detailed above.

For instance, with reference to the at least one fatty acid residue having at least three conjugated double bonds, it is notably described in various literature (review) publications that tung oil as the at least one first drying oil may comprise, relative to the total weight of all fatty acid residues in tung oil, over 60 wt. % of the fatty acid residue of α-eleostearic acid ((9Z,11E,13E)-octadeca-9,11,13-trienoic acid), such as from 65 to 85 wt. % of the fatty acid residue of α-eleostearic acid. Likewise, bitter gourd seed oil as the at least one first drying oil may comprise, relative to the total weight of all fatty acid residues in bitter gourd seed oil, and next to the presence of a minor amount of the fatty acid residue of β-eleostearic acid ((9*E*,11*E*,13*E*)-octadeca-9,11,13-trienoic acid), from 50 to 60 wt. % of the fatty acid residue of α-eleostearic acid ((9*Z*,11*E*,13*E*)-octadeca-9,11,13-trienoic acid). Furthermore, calendula seed oil as the at least one first drying oil may comprise, relative to the total weight of all fatty acid residues in calendula seed oil, and next to the presence of a minor amount of the fatty acid residue of β-calendic acid ((8*E*,10*E*,12*E*)-octadeca-8,10,12-trienoic acid), up to 65 wt. % of the fatty acid residue of α-calendic acid ((8*E*,10*E*,12*Z*)-octadeca-8,10,12-trienoic acid), such as from 50 to 65 wt. % of the fatty acid residue of α-calendic acid. Pomegranate seed oil as the at least one first drying oil may comprise, relative to the total weight of all fatty acid residues in pomegranate seed oil, from 50 to 85 wt. % of the fatty acid residue of punicic acid ((9*Z*,11*E*,13*Z*)-octadeca-9,11,13-trienoic acid), such as about 65 wt. % of the fatty acid residue of punicic acid. Oiticica seed oil as the at least one first drying oil may comprise, relative to the total weight of all fatty acid residues in oiticica seed oil, from 45 to 85 wt. % of the fatty acid residue of α-licanic acid (4-oxo-(9*Z*,11*E*,13*E*)-octadeca-9,11,13-trienoic acid or 4-oxo-α-eleostearic acid).

Within the context of the present invention, it is further understood that the person skilled in the art can determine using common general knowledge and according to standard practice in the art the fatty acid residue profile of a triglyceride oil composition and the corresponding weight percentages of the fatty acid residues comprised therein, relative to the total weight of all fatty acid residues in the triglyceride oil composition. In particular, it is further understood that the person skilled in the art can thus identify and select suitable triglyceride oil compositions for the purpose of the composition (C) of the present invention and determine using common general knowledge and according to standard practice in the art the presence and corresponding amount or weight percentage of the at least one fatty acid residue having at least three conjugated double bonds and the presence and corresponding amount or weight percentage of the saturated fatty acid residues (SAFA) in a triglyceride oil composition, as detailed above, relative to the total weight of all fatty acid residues in the triglyceride oil composition. Suitable methods for the quantitative determination of the fatty acid residues comprised in a triglyceride oil composition, relative to the total weight of all fatty acid residues in the triglyceride oil composition, are for instance ISO 12966-2:2017 or ISO 12966-3:2016 for the preparation of methyl esters of the fatty acid residues (FAMEs), followed by ISO 12966-4:2015 for capillary gas chromatography of the prepared methyl esters of the fatty acid residues (FAMEs).

It is further understood that all definitions and preferences as described above for the triglyceride oil composition equally apply for this embodiment and all further embodiments, as described below.

According to another embodiment of the composition (C) of the present invention, the triglyceride oil composition, as detailed above, further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group (wherein the two non-conjugated double bonds separated by a methylene CH₂ group have the simplified formula -C=C-CH₂-C=C-).

Preferably, the at least one fatty acid residue having at least two non-conjugated double bonds, wherein the at least two non-conjugated double bonds are separated by a methylene CH₂ group, is further characterized by having from 16 to 24 carbon atoms. More preferably, the at least one fatty acid residue having at least two non-conjugated double bonds, wherein the at least two non-conjugated double bonds are separated by a methylene CH₂ group, is further characterized by having from 16 to 20 carbon atoms.

Within the context of the present invention, the expression "at least one fatty acid having at least two non-conjugated double bonds, wherein the at least two non-conjugated double bonds are separated by a methylene CH₂ group" is intended to denote one or more than one fatty acid having at least two non-conjugated double bonds, wherein the at least two non-conjugated double bonds are separated by a methylene CH₂ group. Mixtures of fatty acid residues having at least two non-conjugated double bonds, wherein the at least two non-conjugated double bonds are separated by a methylene CH₂ group, can also be used for the purpose of the invention.

In the rest of the text, the expression "at least one fatty acid having at least two non-conjugated double bonds, wherein the at least two non-conjugated double bonds are separated by a methylene CH₂ group" is understood, for the purposes of the present invention, both in the plural and the singular form, that is to say the triglyceride oil composition, and hence the composition (C) of the present invention comprising said triglyceride oil composition, as detailed above, may comprise one or more than one fatty acid having at least two non-conjugated double bonds, wherein the at least two non-conjugated double bonds are separated by a methylene CH₂ group.

Within the context of the present invention, the expression "the triglyceride oil composition further comprising, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group" refers either to the amount of fatty acid residue having at least two non-conjugated double bonds, wherein the at least two non-conjugated double bonds are separated by a methylene CH₂ group, when the triglyceride oil composition comprises only one fatty acid residue having at least two non-conjugated double bonds, wherein the at least two non-conjugated double bonds are separated by a methylene CH₂ group, or to the sum of the amounts of fatty acid residues having at least two non-conjugated double bonds, wherein the at least two non-conjugated double bonds are separated by a methylene CH₂ group. This being said, it means that it is necessary that, when more than one fatty acid residue having at least two non-conjugated double bonds, wherein the at least two non-conjugated double bonds are separated by a methylene CH₂ group, is further present in the triglyceride oil composition, and hence in the composition (C) of the present invention comprising said triglyceride oil composition, as detailed above, then it is the sum of the amounts of each of said fatty acid residue having at least two non-conjugated double bonds, wherein the at least two non-conjugated double bonds are separated by a methylene CH₂ group, that ranges from 10.00 to 50.00 wt. %, relative to the total weight of all fatty acid residues in the triglyceride oil composition.

The inventors have surprisingly found that by using in the high-solids composition (C) of the present invention, as detailed above, the triglyceride oil composition, as detailed above, wherein the triglyceride oil composition further comprises a defined amount of at least one fatty acid residue having at least two non-conjugated double bonds, wherein the at least two non-conjugated double bonds are separated by a methylene CH₂ group, the defined amount of the at least one fatty acid residue having at least three conjugated double bonds as comprised in the triglyceride oil composition, as detailed above, now synergistically interacts with the defined amount of the at least one fatty acid residue having at least two non-conjugated double bonds as comprised in the triglyceride oil composition, wherein the at least two non-conjugated double bonds are separated by a methylene CH₂ group, thereby resulting in an environmentally friendly and easy to apply high-solids composition (C) being visible light-hardenable or -curable through photoassisted oxypolymerization and now having improved film formation properties, i.e. a reduced film formation time and hence faster film formation, while at least maintaining a rapid hardness build-up and good mechanical properties in terms of hardness upon application of said composition (C) to wood products and thereby resulting in coated layers of said composition (C) on said wood products, and which do not require the combinatorial use of one or more isocyanate-based accelerators, as demonstrated in the experimental section. Advantageously, such improved film formation properties resulting from the synergistic interaction or cooperation between these fatty acid residues have the further advantage that the composition (C), in particular the resulting coated layer of said composition (C) after application to wood products, has reduced chances of being rapidly contaminated by dirt, dust, insects, and the like, which may become trapped in the coated layer while said coated layer is not (yet) solidified and still liquid.

Fatty acid residues, such as fatty acid residues having from 16 to 24 carbon atoms, or from 16 to 20 carbon atoms, having at least two non-conjugated double bonds, wherein the at least two non-conjugated double bonds are separated by a methylene CH₂ group, are known in the art. Non-limiting examples of suitable fatty acid residues having at least two non-conjugated double bonds for use in the triglyceride oil composition, as detailed above, wherein the at least two non-conjugated double bonds are separated by a methylene CH₂ group, notably include fatty acid residues of (7Z,10Z,13Z)-hexadeca-7,10,13-trienoic acid; linoleic acid ((9Z,12Z)-octadeca-9,12-dienoic acid); α-linolenic acid ((9Z,12Z,15Z)-octadeca-9,12,15-trienoic acid); γ-linolenic acid ((6Z,9Z,12Z)-octadeca-6,9,12-trienoic acid); stearidonic acid ((6Z,9Z, 12Z, 15Z)-octadeca-6,9,12,15-tetraenoic acid); eicosadienoic acid ((11*Z*,14*Z*)-icosa-11,14-dienoic acid); (11*Z*,14*Z*,17*Z*)-icosa-11,14,17-trienoic acid; (8*Z*,11*Z*,14*Z*)-icosa-8,11,14-trienoic acid; (5*Z*,8*Z*,11*Z*)-icosa-5,8,11-trienoic acid; (5*Z*,11*Z*,14*Z*)-icosa-5,11,14-trienoic acid; arachidonic acid ((5*Z*,8*Z*,11*Z*,14Z)-icosa-5,8,11,14-tetraenoic acid); and (8*Z*,11*Z*,14*Z*,17*Z*)-icosa-8,11,14,17-tetraenoic acid.

According to a preferred embodiment of the composition (C) of the present invention, the at least one fatty acid residue as comprised in the triglyceride oil composition, as detailed above, said at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene.

Fatty acid residues having a non-conjugated 1,4-pentadiene moiety are known in the art. Non-limiting examples of suitable fatty acid residues having a non-conjugated 1,4-pentadiene moiety notably include fatty acid residues of linoleic acid ((9Z,12Z)-octadeca-9,12-dienoic acid); eicosadienoic acid ((11*Z*,14*Z*)-icosa-11,14-dienoic acid); and (5Z,11Z,14Z)-icosa-5,11,14-trienoic acid.

Fatty acid residues having a non-conjugated 1,4,7-octatriene moiety are known in the art. Non-limiting examples of suitable fatty acid residues having a non-conjugated 1,4,7-octatriene moiety notably include fatty acid residues of (7*Z*,10*Z*,13*Z*)-hexadeca-7,10,13-trienoic acid; α-linolenic acid ((9*Z*,12*Z*,15*Z*)-octadeca-9,12,15-trienoic acid); γ-linolenic acid ((6*Z*,9*Z*,12*Z*)-octadeca-6,9,12-trienoic acid); (11*Z*,14*Z*,17*Z*)-icosa-11,14,17-trienoic acid; and (8*Z*,11*Z*,14*Z*)-icosa-8,11,14-trienoic acid.

According to a more preferred embodiment of the composition (C) of the present invention, the at least one fatty acid residue as further comprised in the triglyceride oil composition, as detailed above, said at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene and said fatty acid residue being selected from the group consisting of fatty acid residues of linoleic acid ((9*Z*,12*Z*)-octadeca-9,12-dienoic acid), eicosadienoic acid ((11*Z*,14*Z*)-icosa-11,14-dienoic acid), (5*Z*,11*Z*,14*Z*)-icosa-5,11,14-trienoic acid, (7*Z*,10*Z*,13*Z*)-hexadeca-7,10,13-trienoic acid, α-linolenic acid ((9*Z*,12*Z*,15*Z*)-octadeca-9,12,15-trienoic acid), γ-linolenic acid ((6Z,9Z,12Z)-octadeca-6,9,12-trienoic acid), (11*Z*,14*Z*,17*Z*)-icosa-11,14,17-trienoic acid, and (8*Z*, 11 *Z*, 14*Z*)-icosa-8, 11, 14-trienoic acid; preferably selected from fatty acid residues of linoleic acid ((9*Z*,12*Z*)-octadeca-9,12-dienoic acid), or α-linolenic acid ((9*Z*,12*Z*,15Z)-octadeca-9,12,15-trienoic acid).

As said above, according to the present invention, in the composition (C), as detailed above, the amount of the at least one fatty acid residue having at least two non-conjugated double bonds as comprised in the triglyceride oil composition, as detailed above, wherein the at least two non-conjugated double bonds are separated by a methylene CH₂ group, is from 10.00 to 50.00 wt. %, relative to the total weight of all fatty acid residues in the triglyceride oil composition.

Advantageously, in the composition (C), as detailed above, the amount of the at least one fatty acid residue having at least two non-conjugated double bonds as further comprised in the triglyceride oil composition, as detailed above, wherein the at least two non-conjugated double bonds are separated by a methylene CH₂ group, relative to the total weight of all fatty acid residues in the triglyceride oil composition, is equal to or greater than 11.00 wt. %, preferably equal to or greater than 12.00 wt. %, more preferably equal to or greater than 13.00 wt. %, even more preferably equal to or greater than 14.00 wt. %.

It is further understood that, in the composition (C), as detailed above, the upper limit of the amount of the at least one fatty acid residue having at least two non-conjugated double bonds as further comprised in the triglyceride oil composition, as detailed above, wherein the at least two non-conjugated double bonds are separated by a methylene CH₂ group, relative to the total weight of all fatty acid residues in the triglyceride oil composition, is equal to or less than 40.00 wt. %, preferably equal to or less than 35.00 wt. %, more preferably equal to or less than 30.00 wt. %, even more preferably equal to or less than 25.00 wt. %, yet even more preferably equal to or less than 22.00 wt. %.

In a preferred embodiment of the composition (C) of the present invention, the at least one fatty acid residue having at least two non-conjugated double bonds, wherein the at least two non-conjugated double bonds are separated by a methylene CH₂ group, as detailed above, is further present in the triglyceride oil composition, as detailed above and relative to the total weight of all fatty acid residues in the triglyceride oil composition, in an amount from 10.00 to 40.00 wt. %, preferably in an amount from 11.00 to 35.00 wt. %, more preferably in an amount from 12.00 to 30.00 wt. %, even more preferably in an amount from 13.00 to 25.00 wt. %, yet even more preferably in an amount from 14.00 to 22.00 wt. %.

According to a preferred embodiment of the composition (C) of the present invention, the triglyceride oil composition, as detailed above, said triglyceride oil composition further comprising at least one fatty acid residue having at least two non-conjugated double bonds, wherein the at least two non-conjugated double bonds are separated by a methylene CH₂ group, as detailed above, further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil. More preferably, the at least one second drying oil is selected from the group consisting of linseed oil, sunflower oil, safflower oil, soybean oil, and walnut oil. Most preferably, the at least one second drying oil is linseed oil.

Within the context of the present invention, the expression "at least one second drying oil" is intended to denote one or more than one second drying oil. Mixtures of second drying oils, as detailed above, can also be used for the purpose of the invention.

In the rest of the text, the expression "at least one second drying oil" is understood, for the purposes of the present invention, both in the plural and the singular form, that is to say the triglyceride oil composition, and hence the composition (C) of the present invention comprising said triglyceride oil composition, as detailed above, may further comprise one or more than one second drying oil, as detailed above.

Within the context of the present invention, it is understood that the person skilled in the art can determine and select according to standard practice in the art a suitable amount of the at least one second drying oil, as detailed above, in such a way that the requirements for the triglyceride oil composition, as comprised in the composition (C) and as detailed above, *inter alia* in terms of the amount of the at least one fatty acid residue having at least two non-conjugated double bonds, wherein the at least two non-conjugated double bonds are separated by a methylene CH₂ group, as detailed above and relative to the total weight of all fatty acid residues in the triglyceride oil composition, are complied with. For this purpose, it is submitted that it is according to the common general knowledge of the person skilled in the art that the at least one second drying oil, as detailed above, and furthermore depending on the nature and the origin of the at least one second drying oil, *inter alia* comprises, relative to the total weight of all fatty acid residues in the at least one second drying oil, a certain weight range of at least one fatty acid residue having at least two non-conjugated double bonds, wherein the at least two non-conjugated double bonds are separated by a methylene CH₂ group, as detailed above.

For instance, with reference to the at least one fatty acid residue having at least two non-conjugated double bonds, wherein the at least two non-conjugated double bonds are separated by a methylene CH₂ group, it is notably described in various literature (review) publications that linseed oil as the at least one second drying oil may comprise, relative to the total weight of all fatty acid residues in linseed oil, from 13 to 19 wt. % of the fatty acid residue of linoleic acid ((9*Z*,12*Z*)-octadeca-9,12-dienoic acid) and from 48 to 60 wt. % of the fatty acid residue of α-linolenic acid ((9*Z*,12*Z*,15*Z*)-octadeca-9,12,15-trienoic acid). Safflower oil as the at least one second drying oil may comprise, relative to the total weight of all fatty acid residues in safflower oil, from 55 to 77 wt. % of the fatty acid residue of linoleic acid ((9*Z*,12*Z*)-octadeca-9,12-dienoic acid) and about 0.1 wt. % of the fatty acid residue of α-linolenic acid ((9*Z*,12*Z*,15*Z*)-octadeca-9,12,15-trienoic acid). Soybean oil as the at least one second drying oil may comprise, relative to the total weight of all fatty acid residues in soybean oil, from 40 to 55 wt. % of the fatty acid residue of linoleic acid ((9*Z*,12*Z*)-octadeca-9,12-dienoic acid) and from 5 to 10 wt. % of the fatty acid residue of α-linolenic acid ((9*Z*,12*Z*,15*Z*)-octadeca-9,12,15-trienoic acid).

Within the context of the present invention, it is further understood that the person skilled in the art can determine using common general knowledge and according to standard practice in the art the fatty acid residue profile of a triglyceride oil composition and the corresponding weight percentages of the fatty acid residues comprised therein, relative to the total weight of all fatty acid residues in the triglyceride oil composition. In particular, it is further understood that the person skilled in the art can thus identify and select suitable triglyceride oil compositions for the purpose of the composition (C) of the present invention and determine according to common general knowledge and standard practice in the art the presence and related amount or weight percentage of the at least one fatty acid residue having at least two non-conjugated double bonds, wherein the at least two non-conjugated double bonds are separated by a methylene CH₂ group, as detailed above, relative to the total weight of all fatty acid residues in the triglyceride oil composition. Suitable methods for the quantitative determination of the fatty acid residues comprised in a triglyceride oil composition, relative to the total weight of all fatty acid residues in the triglyceride oil composition, are for instance ISO 12966-2:2017 or ISO 12966-3:2016 for the preparation of methyl esters of the fatty acid residues (FAMEs), followed by ISO 12966-4:2015 for capillary gas chromatography of the prepared methyl esters of the fatty acid residues (FAMEs).

According to a preferred embodiment of the composition (C) of the present invention, the triglyceride oil composition, as detailed above, comprises, preferably consists essentially of, relative to the total weight of the triglyceride oil composition:
- from 40.00 to 100.00 wt. % of the at least one first drying oil, said at least one first drying oil comprising the at least one fatty acid residue having at least three conjugated double bonds, as detailed above, preferably from 50.00 to 100.00 wt. %, more preferably from 65.00 to 100.00 wt. %, even more preferably from 75.00 to 95.00 wt. %, yet even more preferably from 80.00 to 90.00 wt. %; and
- from 60.00 to 0.00 wt. % of the at least one second drying oil, said at least one second drying oil comprising the at least one fatty acid residue having at least two non-conjugated double bonds, wherein the at least two non-conjugated double bonds are separated by a methylene CH₂ group, as detailed above, preferably from 50.00 to 0.00 wt. %, more preferably from 35.00 to 0.00 wt. %, even more preferably from 25.00 to 5.00 wt. %, yet even more preferably from 20.00 to 10.00 wt. %.

According to a more preferred embodiment of the composition (C) of the present invention, the triglyceride oil composition, as detailed above, comprises, preferably consists essentially of, relative to the total weight of the triglyceride oil composition:
- from 40.00 to 100.00 wt. % of tung oil as the at least one first drying oil, said tung oil as the at least one first drying oil comprising the at least one fatty acid residue having at least three conjugated double bonds, as detailed above, preferably from 50.00 to 100.00 wt. %, more preferably from 65.00 to 100.00 wt. %, even more preferably from 75.00 to 95.00 wt. %, yet even more preferably from 80.00 to 90.00 wt. %; and
- from 60.00 to 0.00 wt. % of linseed oil as the at least one second drying oil, said linseed oil as the at least one second drying oil comprising the at least one fatty acid residue having at least two non-conjugated double bonds, wherein the at least two non-conjugated double bonds are separated by a methylene CH₂ group,as detailed above, preferably from 50.00 to 0.00 wt. %, more preferably from 35.00 to 0.00 wt. %, even more preferably from 25.00 to 5.00 wt. %, yet even more preferably from 20.00 to 10.00 wt. %.

It is further understood that all definitions and preferences as described above for the triglyceride oil composition equally apply for this embodiment and all further embodiments, as described below.

As said above, according to the present invention, the amount of the triglyceride oil composition, as detailed above, as comprised in the composition (C) ranges from 60.00 to 99.00 wt. %, relative to the total weight of the composition (C).

Advantageously, the amount of the triglyceride oil composition, as detailed above, as comprised in the composition (C), relative to the total weight of the composition (C), is equal to or greater than 65.00 wt. %, preferably equal to or greater than 70.00 wt. %, more preferably equal to or greater than 75.00 wt. %, even more preferably equal to or greater than 78.00 wt. %.

In a preferred embodiment of the composition (C) of the present invention, the triglyceride oil composition, as detailed above, relative to the total weight of the composition (C), is present in an amount from 65.00 to 99.00 wt. %, preferably in an amount from 70.00 to 99.00 wt. %, more preferably in an amount from 75.00 to 99.00 wt. %, even more preferably in an amount from 78.00 to 99.00 wt. %.

As said above, according to the present invention, the composition (C) comprises, relative to the total weight of the composition (C), from 0.01 to 2.00 wt. % of at least one metal-based drying agent.

Within the context of the present invention, the expression "at least one metal-based drying agent" is intended to denote one or more than one metal-based drying agent. Mixtures of metal-based drying agents can also be used for the purpose of the invention.

In the rest of the text, the expression "at least one metal-based drying agent" is understood, for the purposes of the present invention, both in the plural and the singular form, that is to say the composition (C) of the present invention may comprise one or more than one metal-based drying agent.

Within the context of the present invention, the expression "from 0.01 to 2.00 wt. % of at least one metal-based drying agent" refers either to the amount of metal-based drying agent when the composition (C) comprises only one metal-based drying agent, or to the sum of the amounts of metal-based drying agent when the composition (C) comprises more than one metal-based drying agent. This being said, it means that it is necessary that, when more than one metal-based drying agent is present, then it is the sum of the amounts of each of said metal-based drying agent that ranges from 0.01 to 2.00 wt. %, relative to the total weight of the composition (C).

Suitable metal-based drying agents, or metal-based drier catalysts, for the purpose of the composition (C) of the present invention, as detailed above, are known to a person skilled in the art. It is understood that it is a general and known practice in the art of wood coating compositions, hence the composition (C) of the present invention and as detailed above, or drying compositions in general, to incorporate one or more metal-based drying agents which aid to achieve an accelerated (i.e. a faster) oxidative drying upon application of said wood coating compositions to wood products and thereby resulting in coated layers of said wood coating compositions on said wood products. It is further understood that the drying ability of wood coating compositions predominantly occurs through air oxidation, i.e. autoxidative drying, and the reaction mechanisms related thereto, in particular said reaction mechanisms proceeding via the formation and decomposition of hydroperoxide intermediates, are described in various literature publications. In general, the metal-based drying agents can thus assist in catalyzing/achieving an accelerated oxidative drying of the wood coating compositions, particularly since said metal-based drying agents can catalyze/accelerate the formation and/or the reduction of the hydroperoxide intermediates formed in order to more rapidly generate one or more crosslinks between unsaturated parts or moieties in the wood coating composition and oxygen (atmospheric O₂ in air) upon application of said wood coating compositions to wood products and thereby resulting in coated layers of said wood coating compositions on said wood products.

According to a preferred embodiment of the composition (C) of the present invention, the at least one metal-based drying agent, as detailed above, is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands.

Suitable nitrogen donor ligands are known in the art, such as for instance including 1,10-phenanthroline and 2,2'-bipyridine. A non-limiting example of a suitable metal-based salt as the at least one metal-based drying agent, and wherein the metal-based salt is further complexed with a nitrogen donor ligand, is iron(1+), chloro[rel-1,5-dimethyl (1*R*,2*S*,4*R*,5*S*)-9,9-dihydroxy-3-methyl-2,4-di(2-pyridinyl-kN)-7-[(2-pyridinyl-kN)methyl]-3,7-diazabicyclo[3.3.1]nonane-1,5-dicarboxylate-kN3,kN7]-, chloride (1-), (OC-6-63)- [CAS registry number 478945-46-9], commercially available as Borchi^{®} OXY - Coat 1410 from Borchers (Milliken). A further non-limiting example of a suitable metal-based salt as the at least one metal-based drying agent, and wherein the metal-based salt is further complexed with a nitrogen donor ligand, is manganese neodecanoate in presence of 2-[[2-(dimethylamino)ethyl]methylamino]ethanol as the nitrogen donor ligand, commercially available as DICNATE MV130A from DIC Corporation.

According to a more preferred embodiment of the composition (C) of the present invention, the at least one metal-based drying agent, as detailed above, is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands.

Non-limiting examples of commercially available metal-based drying agents suitable for use in the composition (C) of the present invention, as detailed above, notably include Borchi^{®} OXY - Coat 1410 commercially available from Borchers (Milliken); Borchi^{®} Dragon commercially available from Borchers (Milliken); DICNATE MV130A from DIC Corporation; and ADDITOL^{®} dry CF100 and CF103 commercially available from Allnex.

It is further understood that all definitions and preferences as described above for the at least one metal-based drying agent equally apply for this embodiment and all further embodiments, as described below.

As said above, according to the present invention, the composition (C) comprises, relative to the total weight of the composition (C), from 0.01 to 2.00 wt. % of at least one metal-based drying agent, as detailed above.

Advantageously, the amount of the at least one metal-based drying agent, as detailed above, as comprised in the composition (C), relative to the total weight of the composition (C), is equal to or greater than 0.02 wt. %, preferably equal to or greater than 0.03 wt. %, more preferably equal to or greater than 0.04 wt. %, even more preferably equal to or greater than 0.05 wt. %.

It is further understood that the upper limit of the amount of the at least one metal-based drying agent, as detailed above, as comprised in the composition (C), relative to the total weight of the composition (C), is equal to or less than 1.80 wt. %, preferably equal to or less than 1.70 wt. %, more preferably equal to or less than 1.60 wt. %, even more preferably equal to or less than 1.50 wt. %.

In a preferred embodiment of the composition (C) of the present invention, the at least one metal-based drying oil, as detailed above, relative to the total weight of the composition (C), is present in an amount from 0.02 to 1.80 wt. %, preferably in an amount from 0.03 to 1.70 wt. %, more preferably in an amount from 0.04 to 1.60 wt. %, even more preferably in an amount from 0.05 to 1.50 wt. %.

As said above, according to the present invention, the composition (C) comprises, relative to the total weight of the composition (C), from 0.50 to 10.00 wt. % of at least one acylphosphine oxide photoinitiator [compound (P1), herein after].

Within the context of the present invention, the expression "at least one acylphosphine oxide photoinitiator" is intended to denote one or more than one acylphosphine oxide photoinitiator. Mixtures of acylphosphine oxide photoinitiators can also be used for the purpose of the invention.

In the rest of the text, the expression "at least one acylphosphine oxide photoinitiator" is understood, for the purposes of the present invention, both in the plural and the singular form, that is to say the composition (C) of the present invention may comprise one or more than one acylphosphine oxide photoinitiator.

Within the context of the present invention, the expression "from 0.50 to 10.00 wt. % of at least one acylphosphine oxide photoinitiator" refers either to the amount of acylphosphine oxide photoinitiator when the composition (C) comprises only one acylphosphine oxide photoinitiator, or to the sum of the amounts of acylphosphine oxide photoinitiator when the composition (C) comprises more than one acylphosphine oxide photoinitiator. This being said, it means that it is necessary that, when more than one acylphosphine oxide photoinitiator is present, then it is the sum of the amounts of each of said acylphosphine oxide photoinitiator that ranges from 0.50 to 10.00 wt. %, relative to the total weight of the composition (C).

Within the context of the present invention, the term "acylphosphine oxide photoinitiator" is intended to refer to a polymerizable/non-polymerizable and/or polymeric/non-polymeric photoinitiating compound comprising at least one acyl functionality (RC(=O)-) directly attached via a C-P bond to a phosphine oxide functionality (-P(=O)-). Upon exposure to light of a specific wavelength, this compound undergoes a photochemical reaction involving Norrish Type I cleavage, thereby resulting in the homolytic dissociation of the C-P bond. This cleavage results in the formation of at least one acyl radical and a phosphinoyl radical. These radicals can initiate and/or accelerate the autoxidative drying process of the composition (C) of the present invention and as detailed above, upon exposure to molecular oxygen, in particular the autoxidative drying process of the triglyceride oil composition in presence of the at least one metal-based drying agent as comprised in the composition (C), and upon application of the composition (C) to wood products and thereby resulting in coated layers of said composition (C) on said wood products. Specifically, these radicals can facilitate the formation of the lipid peroxyl radicals and/or the formation of the lipid hydroperoxide intermediates during the autoxidative drying process of the composition (C). This photoassisted oxypolymerization process may therefore promote and result in an accelerated autoxidative drying of the composition (C).

Within the context of the present invention, the term "polymerizable acylphosphine oxide photoinitiator" is intended to refer to an acylphosphine oxide photoinitiator, as detailed above, further comprising at least one radically polymerizable ethylenically unsaturated double bond (-C=C-) functionality. This additional functionality provides the polymerizable acylphosphine oxide photoinitiator with both photoinitiating properties, as detailed in the paragraph above, and co-polymerization properties. The presence of the at least one radically polymerizable ethylenically unsaturated double bond allows for chemical incorporation thereof during the autoxidative drying process into the cured polymeric matrix upon application of the composition (C) to wood products and thereby resulting in coated layers of said composition (C) on said wood products.

Non-limiting examples of suitable polymerizable and non-polymerizable acylphosphine oxide photoinitiators for the purpose of the composition (C) notably include diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; bis(2,4,6-trimethylbenzoyl)(2,4-dipentyloxyphenyl)phosphine oxide; diphenyl(4-allyloxybenzoyl)phosphine oxide; and diphenyl(4-allyloxy-2,6-dimethylbenzoyl)phosphine oxide.

According to a preferred embodiment of the composition (C) of the present invention, the at least one compound (P1), as detailed above, is an aroylphosphine oxide photoinitiator, in particular a non-polymerizable aroylphosphine oxide photoinitiator, more preferably a benzoylphosphine oxide photoinitiator, in particular a non-polymerizable benzoylphosphine oxide photoinitiator.

As used herein the term "aroyl" has the broadest meaning generally understood in the art as a functionality including an aromatic ring, which may be substituted, said aromatic ring being directly attached to an acyl functionality, forming an aromatic acyl group.

As used herein the term "benzoyl" has the broadest meaning generally understood in the art as a functionality including a benzene ring, which may be substituted, said benzene ring being directly attached to an acyl functionality.

Non-limiting examples of suitable aroylphosphine oxide photoinitiators, in particular benzoylphosphine oxide photoinitiators, for the purpose of the composition (C) of the present invention notably include diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; and bis(2,4,6-trimethylbenzoyl)(2,4-dipentyloxyphenyl)phosphine oxide.

According to a more preferred embodiment of the composition (C) of the present invention, the at least one compound (P1), as detailed above, is a benzoylphosphine oxide photoinitiator selected from the group consisting of diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; and bis(2,4,6-trimethylbenzoyl)(2,4-dipentyloxyphenyl)phosphine oxide. Preferably, the at least one compound (P1) is selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide. More preferably, the at least one compound (P1) is selected from bis(4-methylphenyl)(2,4,6-trimethylbenzoyl)phosphine oxide; or phenylbis(2,4,6-trimethylbenzoyl)phosphine oxide.

Acylphosphine oxide photoinitiator compounds (P1) for the purpose of the composition (C) of the present invention may be chemically synthesized in accordance with the common general knowledge of a person skilled in the art. Said synthesis of acylphosphine oxide photoinitiator compounds (P1) may be carried out using conventional methods known to the person skilled in the art.

Acylphosphine oxide photoinitiator compounds (P1) for the purpose of the composition (C) of the present invention may be commercially available.

As said above, according to the present invention, the composition (C) comprises, relative to the total weight of the composition (C), from 0.50 to 10.00 wt. % of at least one acylphosphine oxide photoinitiator [compound (P1), herein after], as detailed above.

Advantageously, the amount of the at least one compound (P1), as detailed above, as comprised in the composition (C), relative to the total weight of the composition (C), is equal to or greater than 0.60 wt. %, preferably equal to or greater than 0.70 wt. %, more preferably equal to or greater than 0.80 wt. %, even more preferably equal to or greater than 0.90 wt. %.

It is further understood that the upper limit of the amount of the at least one compound (P1), as detailed above, as comprised in the composition (C), relative to the total weight of the composition (C), is equal to or less than 8.00 wt. %, preferably equal to or less than 6.00 wt. %, more preferably equal to or less than 4.00 wt. %, even more preferably equal to or less than 3.00 wt. %.

In a preferred embodiment of the composition (C) of the present invention, the at least one compound (P1), as detailed above, relative to the total weight of the composition (C), is present in an amount from 0.60 to 8.00 wt. %, preferably in an amount from 0.70 to 6.00 wt. %, more preferably in an amount from 0.80 to 4.00 wt. %, even more preferably in an amount from 0.90 to 3.00 wt. %.

As said above, according to the present invention, the composition (C) comprises at least one α-hydroxyalkylphenone photoinitiator [compound (P2), herein after] according to general Formula (I_{P2}) or according to general Formula (II_{P2}), as detailed below, wherein the compound (P2) is present in an amount as determined by a weight ratio of compound (P2) to compound (P1), as detailed above, ranging from 0.5 to 10.0; 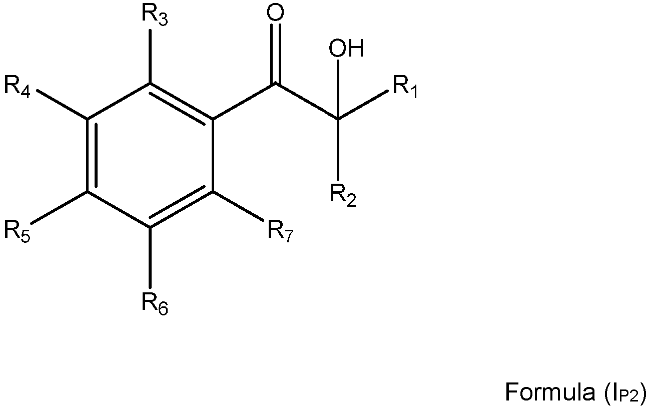 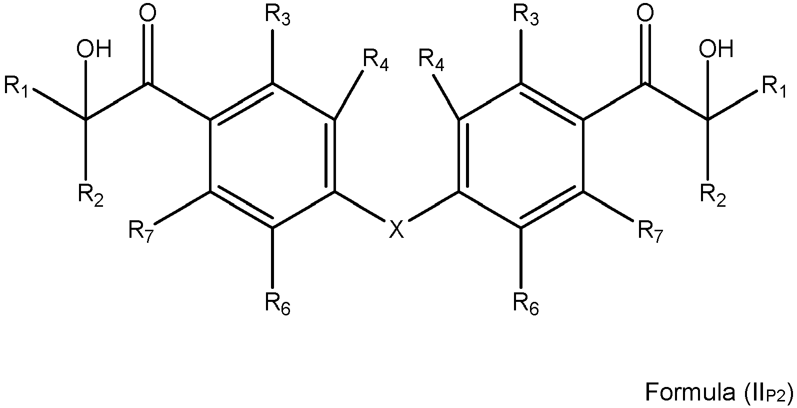 wherein
- each of X is independently selected from CH₂, or O;
- each of R₁, and R₂, equal to or different from each other and at each occurrence, is independently selected from C₁₋₄ alkyl; wherein R₁ and R₂ can together form a C₅₋₆ cycloalkyl;
- each of R₃, R₄, R₅, R₆, and R₇, equal to or different from each other and at each occurrence, is independently selected from the group consisting of hydrogen, C₁₋₄ alkyl, C₁₋₄ hydroxyalkyl, and ORs, and wherein R₈ is independently selected from the group consisting of hydrogen, C₁₋₄ alkyl, and C₁₋₄ hydroxyalkyl.

Within the context of the present invention, the expression "at least one α-hydroxyalkylphenone photoinitiator [compound (P2), herein after] according to general Formula (I_{P2}) or according to general Formula (II_{P2})" is intended to denote one or more than one compound (P2) according to general Formula (I_{P2}) or according to general Formula (II_{P2}). Mixtures of compounds (P2) according to general Formula (I_{P2}) and/or according to general Formula (II_{P2}) can also be used for the purpose of the invention.

In the rest of the text, the expression "at least one α-hydroxyalkylphenone photoinitiator [compound (P2), herein after] according to general Formula (I_{P2}) or according to general Formula (II_{P2})" is understood, for the purposes of the present invention, both in the plural and the singular, that is to say the composition (C) of the present invention may comprise one or more than one compound (P2) according to general Formula (I_{P2}) and/or according to general Formula (II_{P2}).

Within the context of the present invention, the expression "wherein the compound (P2) is present in an amount as determined by a weight ratio of compound (P2) to compound (P1) ranging from 0.5 to 10.0" refers either to the amount of compound (P2) according to general Formula (I_{P2}) and/or according to general Formula (II_{P2}) when the composition (C) comprises only one compound (P2) according to general Formula (I_{P2}) or according to general Formula (II_{P2}), or to the sum of the amounts of compound (P2) according to general Formula (I_{P2}) and/or according to general Formula (II_{P2}) when the composition (C) comprises more than one compound (P2) according to general Formula (I_{P2}) and/or according to general Formula (II_{P2}). This being said, it means that it is necessary that, when more than one compound (P2) according to general Formula (I_{P2}) and/or according to general Formula (II_{P2}) is present, then it is the sum of the amounts of each of said compound (P2) according to general Formula (I_{P2}) and/or according to general Formula (II_{P2}) that must fulfill the weight ratio of compound (P2) to compound (P1) ranging from 0.5 to 10.0.

As used herein the term "alkyl" has the broadest meaning generally understood in the art, and may include a moiety which is linear or branched, or a combination thereof. The term "alkyl", alone or in combination, means a straight or branched alkane-derived radical, for example, C_{F-G} alkyl defines a straight or branched alkyl radical having from F to G carbon atoms, e.g. C₁₋₄ alkyl defines a straight or branched alkyl radical having from 1 to 4 carbon atoms such as for example methyl, ethyl, 1-propyl, 2-propyl (isopropyl), 1-butyl, 2-butyl, 2-methyl-2-propyl (tert-butyl), 2-methyl-1-propyl (isobutyl).

The term "cycloalkyl", alone or in combination, means a cyclic alkane-derived radical having one or more cyclic structures. Cycloalkyl includes all saturated hydrocarbon groups comprising one or more rings, including monocyclic or bicyclic groups. The further rings of multi-ring cycloalkyls may be either fused, bridged and/or joined through one or more spiro atoms. For example, C_{L-M} cycloalkyl defines a cyclic alkyl radical having from L to M carbon atoms, e.g. C₅₋₆ cycloalkyl defines a cyclic alkyl radical having from 5 to 6 carbon atoms such as for example cyclopentyl, cyclohexyl and the like, preferably cyclopentyl, and cyclohexyl.

The term "hydroxyalkyl", alone or in combination, means a straight or branched alkane-derived radical substituted with at least one hydroxy group, provided that if two hydroxy groups are present they are not both on the same carbon atom. For example, C_{F-G} alkyl defines a straight or branched alkyl radical having from F to G carbon atoms, wherein said alkyl radical is substituted with at least one hydroxy group. C₁₋₄ hydroxyalkyl defines a straight or branched alkyl radical having from 1 to 4 carbon atoms, wherein said alkyl radical is substituted with at least one hydroxy group, preferably one hydroxy group. Representative examples include, but are not limited to, hydroxymethyl; 2-hydroxyethyl; 2-hydroxypropyl; 3-hydroxypropyl; 2-hydroxybutyl; 3-hydroxybutyl; 4-hydroxybutyl; 2,3-dihydroxpropyl; 1-(hydroxymethyl)-2-hydroxyethyl; 2,3-dihydroxybutyl; 3,4-dihydroxybutyl; and 2-(hydroxymethyl)-3-hydroxypropyl; preferably 2-hydroxyethyl, 2-hydroxypropyl; 3-hydroxypropyl; 2-hydroxybutyl; 3-hydroxybutyl; and 4-hydroxybutyl; more preferably 2-hydroxyethyl.

The inventors have surprisingly found that by using in the high-solids composition (C) of the present invention, as detailed above, a defined amount of at least one α-hydroxyalkylphenone photoinitiator compound (P2) according to general Formula (I_{P2}) or according to general Formula (II_{P2}), as detailed above, in combination with a defined amount of at least one acylphosphine oxide photoinitiator compound (P1), as detailed above, a defined amount of at least one metal-based drying agent, as detailed above, and a defined amount of a triglyceride oil composition, as detailed above, wherein the triglyceride oil composition comprises a defined amount of at least one fatty acid residue having at least three conjugated double bonds, as detailed above, the defined amount of the at least one α-hydroxyalkylphenone photoinitiator compound (P2) according to general Formula (I_{P2}) or according to general Formula (II_{P2}) now synergistically interacts with the defined amount of the at least one acylphosphine oxide photoinitiator compound (P1), thereby resulting in an environmentally friendly and easy to apply high-solids composition (C) being visible light-hardenable or -curable through photoassisted oxypolymerization and now having a rapid hardness build-up while at least maintaining good film formation properties, i.e. without jeopardizing or impairing film formation, and mechanical properties in terms of hardness upon application of said composition (C) to wood products and thereby resulting in coated layers of said composition (C) on said wood products, and which do not require the combinatorial use of one or more isocyanate-based accelerators, as demonstrated in the experimental section. In particular, the inventors have surprisingly found that the photoassisted oxypolymerization of the high-solids composition (C) of the present invention can now be synergistically accelerated due to the synergistic interaction between the defined amounts of the two types of photoinitiators, i.e. on the one hand the at least one acylphosphine oxide photoinitiator compound (P1) and on the other hand the at least one α-hydroxyalkylphenone photoinitiator compound (P2) according to general Formula (I_{P2}) or according to general Formula (II_{P2}), thereby resulting in a synergistically enhanced hardness build-up upon application of said composition (C) to wood products and thereby resulting in coated layers of said composition (C) on said wood products, and this without any use of one or more isocyanate-based accelerators, as demonstrated in the experimental section.

Preferably, each of R₁ is independently selected from the group consisting of methyl, ethyl, propyl, and isopropyl; or wherein R₁ and R₂ can together form a C₅₋₆ cycloalkyl. More preferably, each of R₁ is independently selected from methyl, or ethyl; or wherein R₁ and R₂ can together form a C₆ cycloalkyl. Even more preferably, each of R₁ is methyl; or wherein R₁ and R₂ can together form a C₆ cycloalkyl. Most preferably, each of R₁ is methyl.

Preferably, each of R₂ is independently selected from the group consisting of methyl, ethyl, propyl, and isopropyl; or wherein R₁ and R₂ can together form a C₅₋₆ cycloalkyl. More preferably, each of R₂ is independently selected from methyl, or ethyl; or wherein R₁ and R₂ can together form a C₆ cycloalkyl. Even more preferably, each of R₂ is methyl; or wherein R₁ and R₂ can together form a C₆ cycloalkyl. Most preferably, each of R₂ is methyl.

Preferably, each of R₃ is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl. More preferably, each of R₃ is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl. Even more preferably, each of R₃ is independently selected from the group consisting of hydrogen, methyl, and ORs, and wherein R₈ is independently selected from methyl, or 2-hydroxyethyl. Most preferably, each of R₃ is hydrogen.

Preferably, each of R₄ is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl. More preferably, each of R₄ is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl. Even more preferably, each of R₄ is independently selected from the group consisting of hydrogen, methyl, and ORs, and wherein R₈ is independently selected from methyl, or 2-hydroxyethyl. Most preferably, each of R₄ is hydrogen.

Preferably, each of R₅ is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl. More preferably, each of R₅ is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl. Even more preferably, each of R₅ is independently selected from the group consisting of hydrogen, methyl, and ORs, and wherein R₈ is independently selected from methyl, or 2-hydroxyethyl. Most preferably, each of R₅ is hydrogen.

Preferably, each of R₆ is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl. More preferably, each of R₆ is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl. Even more preferably, each of R₆ is independently selected from the group consisting of hydrogen, methyl, and ORs, and wherein R₈ is independently selected from methyl, or 2-hydroxyethyl. Most preferably, each of R₆ is hydrogen.

Preferably, each of R₇ is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl. More preferably, each of R₇ is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl. Even more preferably, each of R₇ is independently selected from the group consisting of hydrogen, methyl, and ORs, and wherein R₈ is independently selected from methyl, or 2-hydroxyethyl. Most preferably, each of R₇ is hydrogen.

It is further understood that, in the composition (C), as detailed above, the at least one compound (P2) according to general Formula (II_{P2}) is preferably a symmetrical compound (P2) according to general Formula (II_{P2}) meaning that within a single compound (P2) according to general Formula (II_{P2}) each of X is identical or the same; each of R₁, as detailed above, is identical or the same; each of R₂, as detailed above, is identical or the same; each of R₃, as detailed above, is identical or the same; each of R₄, as detailed above, is identical or the same; each of R₆, as detailed above, is identical or the same; and each of R₇, as detailed above, is identical or the same, respectively.

Non-limiting examples of suitable compounds (P2) according to general formula general Formula (I_{P2}) for the purpose of the composition (C) of the present invention notably include 2-hydroxy-2-methylpropiophenone; 1-hydroxycyclohexyl phenyl ketone; 2-hydroxy-4'-(2-hydroxyethoxy)-2-methylpropiophenone; 2-hydroxy-4'-isopropyl-2-methylpropiophenone; 2-hydroxy-2,3',4'-trimethylpropiophenone; 2-hydroxy-1-(4-methoxyphenyl)-2-methyl-1-propanone; and 2-ethyl-2-hydroxy-4'-methylhexanophenone.

Non-limiting examples of suitable compounds (P2) according to general formula general Formula (II_{P2}) for the purpose of the composition (C) of the present invention notably include 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one.

Compounds (P2) according to general Formula (I_{P2}) or according to general Formula (II_{P2}) for the purpose of the composition (C) of the present invention may be chemically synthesized in accordance with the common general knowledge of a person skilled in the art. Said synthesis of compounds (P2) according to general Formula (I_{P2}) or according to general Formula (II_{P2}) may be carried out using conventional methods known to the person skilled in the art.

Compounds (P2) according to general Formula (I_{P2}) or according to general Formula (II_{P2}) for the purpose of the composition (C) of the present invention may be commercially available, such as from ABCR.

According to a preferred embodiment of the composition (C) of the present invention, the at least one α-hydroxyalkylphenone photoinitiator compound (P2) according to general Formula (I_{P2}) or according to general Formula (II_{P2}), as detailed above, is selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-4'-isopropyl-2-methylpropiophenone; 2-hydroxy-2,3',4'-trimethylpropiophenone; 2-hydroxy-1-(4-methoxyphenyl)-2-methyl-1-propanone; 2-ethyl-2-hydroxy-4'-methylhexanophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one. Preferably, the at least one α-hydroxyalkylphenone photoinitiator compound (P2) according to general Formula (I_{P2}) or according to general Formula (II_{P2}) is selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-4'-isopropyl-2-methylpropiophenone; 2-hydroxy-2,3',4'-trimethylpropiophenone; 2-hydroxy-1-(4-methoxyphenyl)-2-methyl-1-propanone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one. More preferably, the at least one α-hydroxyalkylphenone photoinitiator compound (P2) according to general Formula (I_{P2}) or according to general Formula (II_{P2}) is selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one. Even more preferably, the at least one α-hydroxyalkylphenone photoinitiator compound (P2) according to general Formula (I_{P2}) or according to general Formula (II_{P2}) is selected from the group consisting of 2-hydroxy-2-methylpropiophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one. Most preferably, the at least one α-hydroxyalkylphenone photoinitiator compound (P2) according to general Formula (I_{P2}) or according to general Formula (II_{P2}) is 2-hydroxy-2-methylpropiophenone.

As said above, the compound (P2), as detailed above, is present in an amount as determined by a weight ratio of compound (P2) to compound (P1), as detailed above, ranging from 0.5 to 10.0.

Advantageously, the weight ratio of compound (P2) to compound (P1) is equal to or greater than 0.6, preferably equal to or greater than 0.7, more preferably equal to or greater than 0.8, even more preferably equal to or greater than 0.9.

It is further understood that the upper limit of the weight ratio of compound (P2) to compound (P1) is equal to or less than 9.0, preferably equal to or less than 8.0, more preferably equal to or less than 7.0, even more preferably equal to or less than 6.0.

In a preferred embodiment of the composition (C) of the present invention, the weight ratio of compound (P2) to compound (P1) ranges from 0.6 to 9.0, preferably from 0.7 to 8.0, more preferably from 0.8 to 7.0, even more preferably from 0.9 to 6.0.

As said above, according to the present invention, the composition (C) comprises, relative to the total weight of the composition (C), equal to or less than 5.00 wt. % of at least one radically polymerizable (meth)acrylic-functionalized compound, and when applicable, wherein said at least one radically polymerizable (meth)acrylic-functionalized compound is different from the compound (P1), as detailed above.

Within the context of the present invention, the expression "equal to or less than 5.00 wt. % of at least one radically polymerizable (meth)acrylic-functionalized compound, wherein said at least one radically polymerizable (meth)acrylic-functionalized compound is different from the compound (P1), as detailed above" refers either to the amount of such radically polymerizable (meth)acrylic-functionalized compound when the composition (C) comprises only one of said radically polymerizable (meth)acrylic-functionalized compound, or to the sum of the amounts of such radically polymerizable (meth)acrylic-functionalized compounds when the composition (C) comprises more than one of said radically polymerizable (meth)acrylic-functionalized compound. This being said, it means that it is necessary that, when more than one of said radically polymerizable (meth)acrylic-functionalized compound is present, then it is the sum of the amounts of each of said radically polymerizable (meth)acrylic-functionalized that is equal to or less than 5.00 wt. %, relative to the total weight of the composition (C).

Within the context of the present invention, the term "at least one radically polymerizable (meth)acrylic-functionalized compound" is intended to refer to compounds having at least one radically polymerizable (meth)acrylic acid functional group or at least one radically polymerizable (meth)acrylate functional group such as a salt, a conjugate base, or an ester of said at least one radically polymerizable (meth)acrylic acid functional group; which under the influence of irradiation, a (photo)initiator, and/or a metal-based drying agent can undergo radical polymerization, thereby particularly including radical co-polymerization with the triglyceride oil composition, as detailed above, and, when applicable, with the compound (P1), as detailed above, during the autoxidative drying process into the cured polymeric matrix upon application of the composition (C) to wood products and thereby resulting in coated layers of said composition (C) on said wood products.

The inventors therefore limit the total combined amount of additional radically polymerizable (meth)acrylic-functionalized compounds in the composition (C), as detailed above, to minor quantities, as detailed above, i) on the one hand to ensure that these compounds do not substantially interfere with the autoxidative drying process into the cured polymeric matrix or alter the final properties of the composition (C) upon application of the composition (C) to wood products and thereby resulting in coated layers of said composition (C) on said wood products, and ii) on the other hand to further distance from known ultraviolet(UV)-curable waterborne wood coating compositions, which typically are aqueous emulsions or aqueous dispersions of acrylic polymers and polyurethane-acrylate hybrids having radically polymerizable (meth)acrylic functionalities, such as radically polymerizable (meth)acrylate functionalities, which may result in undesirable grain raising (water popping or grain-popping) due to the presence of significant amounts of water in such wood coating compositions, as described above, and which generally and typically require exposure to UV irradiation for curing and crosslinking, thereby making effective manual application cumbersome when applied to wood products to coat wood surfaces.

Non-limiting examples of such radically polymerizable (meth)acrylic-functionalized compounds, wherein said radically polymerizable (meth)acrylic-functionalized compounds are different from the compound (P1), as detailed above, notably include radically polymerizable (meth)acrylate-functionalized compounds such as (meth)acrylate-functionalized monomers, and (meth)acrylate-functionalized (co)polymers such as polyether (meth)acrylates, urethane (meth)acrylates, epoxy (meth)acrylates, polyester (meth)acrylates, amino (meth)acrylates, melamine (meth)acrylates, silicone (meth)acrylates, phosphazene (meth)acrylates, and (meth)acrylic (meth)acrylates or mixtures thereof.

Advantageously, the amount of the at least one radically polymerizable (meth)acrylic-functionalized compound, wherein said at least one radically polymerizable (meth)acrylic-functionalized compound is different from the compound (P1), as detailed above, is equal to or less than 4.00 wt. %, preferably equal to or less than 3.00 wt. %, more preferably equal to or less than 2.00 wt. %, even more preferably equal to or less than 1.00 wt. %, relative to the total weight of the composition (C).

Preferably, the composition (C), as detailed above, is substantially free of one or more of radically polymerizable (meth)acrylic-functionalized compounds, wherein said radically polymerizable (meth)acrylic-functionalized compounds are different from the compound (P1), as detailed above.

For the purpose of the present invention, the expression "substantially free of one or more of radically polymerizable (meth)acrylic-functionalized compounds, wherein said radically polymerizable (meth)acrylic-functionalized compounds are different from the compound (P1)" means that the amount of the at least one radically polymerizable (meth)acrylic-functionalized compound, wherein said at least one radically polymerizable (meth)acrylic-functionalized compound is different from the compound (P1), relative to the total weight of the composition (C), is equal to or less than 1.00 wt. %, preferably equal to or less than 0.50 wt. %, more preferably equal to or less than 0.10 wt. %.

As said above, according to the present invention, the composition (C), as detailed above, has a total solids content equal to or greater than 90.00 wt. %, relative to the total weight of the composition (C), and wherein the total solids content of the composition (C) is measured according to the standard ASTM D2369 - 20. In other words, the composition (C) is substantially free of volatile content as measured according to the standard ASTM D2369 - 20.

Within the context of the present invention, the standard ASTM D2369 - 20 is used to obtain a weight percent of solids (non-volatile matter) by difference for determining the volatiles emitted by coatings. Typically, a sample of material is placed in a weighing dish, such as an aluminum foil weighing dish, and placed in a convection oven at 110° C ± 5 °C for 60 minutes. The weight remaining in the weighing dish, i.e. the weight of the residual solids, is then determined and the total solids content is then calculated based on the weight of the residual solids. The mass lost represents the total weight percent of volatile content.

Advantageously, the composition (C) according to the present invention, as detailed above, has a total solids content equal to or greater than 92.50 wt. %, preferably equal to or greater than 95.00 wt. %, more preferably equal to or greater than 97.00 wt. %, even more preferably equal to or greater than 99.00 wt. %, wherein all wt. % are relative to the total weight of the composition (C), and wherein the total solids content of the composition (C) is measured according to the standard ASTM D2369 - 20.

The inventors have surprisingly found that the composition (C), as detailed above, can be successfully characterized as a high-solids composition (C) which is substantially free of volatile content, such as water and volatile organic compounds (VOC), in particular volatile organic compounds (VOC), thereby avoiding undesirable grain raising (water popping or grain-popping) when applied to wood surfaces due to the presence of significant amounts of water as described above, while still resulting in a composition (C) being visible light-hardenable or -curable through photoassisted oxypolymerization and having a rapid hardness build-up while at least maintaining good film formation properties, i.e. without jeopardizing or impairing film formation, and mechanical properties in terms of hardness upon application of said composition (C) to wood products and thereby resulting in coated layers of said composition (C) on said wood products, as demonstrated in the experimental section, and which do not require the combinatorial use of one or more isocyanate-based accelerators, as demonstrated in the experimental section.

It is further understood that all definitions and preferences, as described above, equally apply for all further embodiments, as described below.

According to certain embodiments of the present invention, the composition (C), as detailed above, may further comprise at least one micronized wax [micronized wax (Mₚ), herein after] having a particle size D₉₀ equal to or less than 36 µm and a particle size D₅₀ equal to or less than 20 µm.

Micronized waxes (Mₚ) are known in the art. Non-limiting examples of suitable micronized waxes (Mₚ) for use in the composition (C), as detailed above, notably include micronized polytetrafluoroethylene wax; micronized hybrid wax of polyethylene-polytetrafluoroethylene wax; micronized Fischer-Tropsch wax; micronized polyethylene wax, such as non-polar polyethylene wax and micronized oxidized high-density polyethylene wax; micronized polypropylene wax, such as micronized non-polar polypropylene wax; micronized polyamide wax, such as micronized ethylene-bis-stearamide wax, micronized erucamide wax, micronized stearamide wax, and micronized amide wax made of sugar cane; micronized carnauba wax; micronized wax made of starch, such as micronized wax made of corn starch; and micronized polymer hybrids thereof, such as micronized hybrid wax of Fischer-Tropsch wax polytetrafluoroethylene wax and silica, micronized hybrid wax of Fischer-Tropsch wax and polyethylene wax, micronized hybrid wax of polyethylene wax and amide wax, micronized hybrid wax of Fischer-Tropsch wax and amide wax, micronized hybrid wax of polyethylene wax polypropylene wax Fischer-Tropsch wax and amide wax.

Within the context of the present invention, the expression "at least one micronized wax" is intended to denote one or more than one micronized wax. Mixtures of micronized waxes can also be used for the purpose of the invention. In the remainder of the text, the expression "micronized wax" is understood, for the purposes of the present invention, both in the plural and the singular form.

The micronized wax (Mₚ) may be commercially available. The micronized wax (Mₚ) may be prepared according to preparation methods known in the art. Said preparation of the micronized wax (Mₚ) may be carried out using conventional methods known to the skilled in the art such as melt dispersion techniques, spraying techniques such as spray chilling, milling techniques such as air jet milling, precipitation techniques, grinding techniques, or bead polymerization.

The use and presence of micronized waxes (Mₚ) has a decisive influence with regards to the resulting composition (C) according to the present invention having good abrasion resistance, scratch resistance, antiblocking, water repellency, and slip resistance properties when being applied to wood products.

Advantageously, the micronized wax (Mₚ), as detailed above, has a particle size D₉₀ equal to or less than 32.0 µm and a particle size D₅₀ equal to or less than 18.0 µm, preferably a particle size D₉₀ equal to or less than 29.0 µm and a particle size D₅₀ equal to or less than 16.0 µm, more preferably a particle size D₉₀ equal to or less than 25.0 µm and a particle size D₅₀ equal to or less than 14.0 µm, more preferably a particle size D₉₀ equal to or less than 22.0 µm and a particle size D₅₀ equal to or less than 12.0 µm, more preferably a particle size D₉₀ equal to or less than 18.0 µm and a particle size D₅₀ equal to or less than 10.0 µm.

According to one embodiment of the composition (C) of the present invention, the particles of the micronized wax (Mₚ), as detailed above, have a particle size according to one of the following particle size distributions:
D₁₀ ≤ 3.0 µm and D₉₀ ≤ 36.0 µm and D₅₀ ≤ 20.0 µm;
preferably, D₁₀ ≤ 3.0 µm and D₉₀ ≤ 32.0 µm and D₅₀ ≤ 18.0 µm;
more preferably, D₁₀ ≤ 3.0 µm and D₉₀ ≤ 29.0 µm and D₅₀ ≤ 16.0 µm;
more preferably, D₁₀ ≤ 3.0 µm and D₉₀ ≤ 25.0 µm and D₅₀ ≤ 14.0 µm;
more preferably, D₁₀ ≤ 3.0 µm and D₉₀ ≤ 22.0 µm and D₅₀ ≤ 12.0 µm;
more preferably, D₁₀ ≤ 3.0 µm and D₉₀ ≤ 18.0 µm and D₅₀ ≤ 10.0 µm.

According to the present invention, a particle size of the micronized wax (Mₚ), as detailed above, expressed as Dₓₓ ≤ Y denotes a percentage (xx%) by weight of particles of the micronized wax (Mₚ) having a particle size equal to or less than Y.

For example, D₉₀ ≤ 32.0 µm denotes that 90 wt. % of the particles of the micronized wax (Mₚ), as detailed above, has a particle size equal to or less than 32.0 µm.

According to the present invention, the particle size of the particles of the micronized wax (Mₚ) is measured according to DIN ISO 13320:2020.

Generally, when present in the composition (C) of the present invention, the amount of the micronized wax (Mₚ), as detailed above, is from 0.00 to 20.00 wt. %, or from 2.00 to 20.00 wt. %, or from 5.00 to 20.00 wt. %, or from 5.00 to 15.00 wt. %, or from 10.00 to 15.00 wt. %, relative to the total weight of the composition (C).

According to certain embodiments of the present invention, the composition (C), as detailed above, may further comprise at least one pigment to enhance the appearance of the composition (C).

Within the context of the present invention, the expression "at least one pigment" is intended to denote one or more than one pigment. Mixtures of pigments can also be used for the purpose of the invention. In the remainder of the text, the expression "pigment" is understood, for the purposes of the present invention, both in the plural and the singular form.

Said pigments for the purpose of the composition (C) of the present invention are known to those skilled in the art of wood coating compositions. Non-limiting examples of suitable pigments notably include: inorganic and organic pigments. As non-limiting examples of suitable inorganic pigments mention may be made of compounds of metals such as iron, zinc, titanium, lead, chromium, copper, cadmium, calcium, zirconium, cobalt, magnesium, aluminum, nickel, and other transition metals. Generally, some non-limiting examples of suitable inorganic pigments include iron oxides, including red iron oxides, yellow iron oxides, black micaceous iron oxide, black iron oxides, and brown iron oxides; iron hydroxide; graphite; carbon black; aluminum oxide; calcium carbonate; calcium phosphate; calcium oxide; calcium hydroxide; bismuth carbonate; bismuth oxide; bismuth hydroxide; copper carbonate; copper oxide; copper hydroxide; silicon oxide; zinc carbonate; zinc phosphate; zinc oxide; zinc sulfide; zinc chromate; barium carbonate; barium hydroxide; barium chromate; strontium carbonate; chrome oxide; titanium dioxide; tin oxide; antimony oxide; or mixtures of two or more thereof. As non-limiting examples of suitable organic pigments mention may be made of monoazo (arylide) pigments such as PY3, PY65, PY73, PY74, PY97 and PY98; disazo (diarylide) pigments; disazo (bishydrazone) condensation pigments; benzimidazolone pigments; naphthol pigments; isoindoline pigments; isoindolinone pigments; quinacridone pigments; perylene pigments; perinone pigments; anthraquinone pigments; diketopyrrolopyrrole pigments; diaryl pyrrolopyrole pigments; dioxazine pigments; triacrylcarbonium pigments; phthalocyanine pigments, such as cobalt phthalocyanine, copper phthalocyanine, copper polychlorophthalocyanine, copper semichlorophthalocyanine, copper monochlorophthalocyanine, metal-free phthalocyanine; thioindigo pigments; quinophthalone pigments; or mixtures of two or more thereof.

The at least one pigment, as detailed above, is typically provided as a paste in a suitable drying oil or drying oil mixture as a result of said at least one pigment being dispersed in said suitable drying oil or drying oil mixture in the presence of suitable wetting and/or dispersing agents. Such pigment pastes comprising the at least one pigment are commercially available and known to the person skilled in the art. It is further understood that when the at least one pigment is provided in a suitable drying oil or drying oil mixture, said drying oil or drying oil mixture must be selected such that the requirements of the triglyceride oil composition as comprised in the composition (C), as detailed above, are complied with, in particular the requirements with respect to the fatty acid residues as comprised in said triglyceride oil composition.

As to the amount of the pigments, it is understood that the skilled person in the art will practise said pigments in a suitable amount according to standard and general practice known by said skilled person in the art.

Generally, when present in the composition (C) of the present invention, the amount of the at least one pigment, as detailed above, is from 0.00 to 20.00 wt. %; or from 0.00 to 15.00 wt. % such as from 2.00 to 15.00 wt. % or from 3.00 to 15.00 wt. %; or from 0.00 to 10.00 wt. % such as from 5.00 to 10.00 wt. %, relative to the total weight of the composition (C).

According to certain embodiments of the present invention, the composition (C), as detailed above, may further comprise at least one other additional ingredient [ingredient (Ic), herein after] to enhance the appearance, storage, transport, handling and/or performance of the composition (C).

Within the context of the present invention, the expression "at least one other additional ingredients [ingredient (Ic), herein after]" is intended to denote one or more than one ingredient (Ic). Mixtures of ingredients (Ic) can also be used for the purpose of the invention. In the remainder of the text, the expression "ingredient (Ic)" is understood, for the purposes of the present invention, both in the plural and the singular form.

Said ingredients (Ic) are known to those skilled in the art of wood coating compositions. Non-limiting examples of ingredients (Ic) notably include: rheology modifiers, such as polyurethane and urea based thickening agents that may induce a shear-thinning flow behavior; methyl or ethyl esters of vegetable oils; microcrystalline waxes; inorganic or organic UV absorbers; fire retardants; surfactants; dispersants; wetting agents; defoaming agents; water repellent agents; biocides such as pesticides, herbicides, insecticides, weedicides, miticides, fungicides, moldicides, algaecides, acaricides, nematicides, bactericides, and rodenticides; plasticizers; hindered amine light stabilizers (HALS); anti-skinning agents; coalescing agents; fragrances; or mixtures of two or more thereof.

Methyl or ethyl esters of vegetable oils are known in the art, are commercially available, and can be prepared according to the common general knowledge of a person skilled in the art, for example via a (base-catalyzed) transesterification reaction. Non-limiting examples of suitable methyl or ethyl esters of vegetable oils notable include sunflower oil methyl or ethyl ester; linseed oil methyl or ethyl ester; and tung oil methyl or ethyl ester. Depending on the nature and the origin of the vegetable oil component of such methyl or ethyl esters, and hence the fatty acid residue profile corresponding to said vegetable oil component of such methyl or ethyl esters, these methyl or ethyl esters of vegetable oils may further contribute, in addition to the fatty acid residues as comprised in the triglyceride oil composition, as detailed above, to one or more of the film formation properties, the hardness, the oxidative crosslinking and the drying capacity of the composition (C), as detailed above, while reducing the viscosity of the composition (C), and upon application of said composition (C) to wood products and thereby resulting in coated layers of said composition (C) on said wood products.

As to the amount of the ingredients (Ic), it is understood that the skilled person in the art will practise said additional ingredients (Ic) in a suitable amount according to standard and general practice known by said skilled person in the art.

Generally, when present in the composition (C) of the present invention, the amount of the ingredients (Ic), as detailed above, is from 0.00 to 11.00 wt. %, or from 0.10 to 11.00 wt. %, or from 1.00 to 10.00 wt. %, or from 1.00 to 8.00 wt. %, or from 2.00 to 8.00 wt. %, or from 3.00 to 7.00 wt. %, relative to the total weight of the composition (C).

It is further understood that all definitions and preferences, as described above, equally apply for all further embodiments, as described below.

According to a preferred embodiment of the composition (C) of the present invention, the composition (C), as detailed above, comprises, or consists essentially of, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 40.00 to 85.00 wt. % of at least one fatty acid residue having at least three conjugated double bonds, wherein said at least one fatty acid residue is a conjugated triene fatty acid residue; wherein the triglyceride oil composition optionally further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above;
- from 0.50 to 10.00 wt. % of at least one acylphosphine oxide photoinitiator [compound (P1), herein after], wherein the compound (P1) is an aroylphosphine oxide photoinitiator, preferably a non-polymerizable aroylphosphine oxide photoinitiator;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 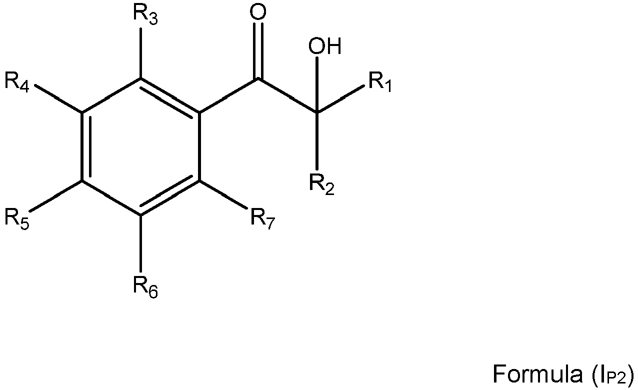 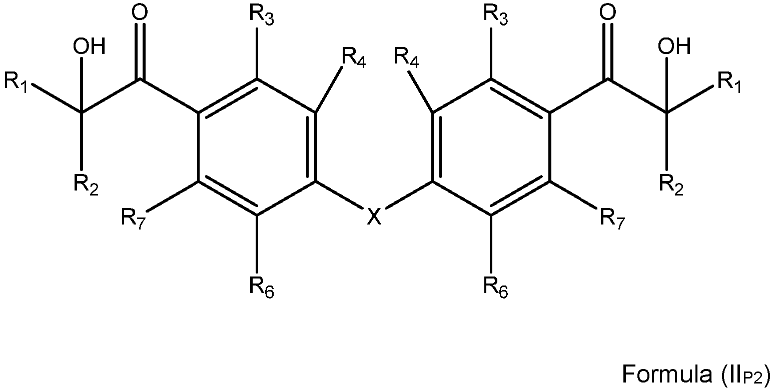 wherein
   - each of X is independently selected from CH₂, or O;
   - each of R₁, and R₂, equal to or different from each other and at each occurrence, is independently selected from the group consisting of methyl, ethyl, propyl, and isopropyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl;
- equal to or less than 5.00 wt. % of at least one radically polymerizable (meth)acrylic-functionalized compound different from the compound (P1);
- from 0.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- from 0.00 to 11.00 wt. % of at least one ingredient (Ic), as detailed above, wherein the composition (C) has a total solids content equal to or greater than 90.00 wt. %, relative to the total weight of the composition (C), and wherein the total solids content of the composition (C) is measured according to the standard ASTM D2369 - 20.

According to a preferred embodiment of the composition (C) of the present invention, the composition (C), as detailed above, consists essentially of, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 40.00 to 85.00 wt. % of at least one fatty acid residue having at least three conjugated double bonds, wherein said at least one fatty acid residue is a conjugated triene fatty acid residue;
   wherein the triglyceride oil composition optionally further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above; and
- from 0.50 to 10.00 wt. % of at least one acylphosphine oxide photoinitiator [compound (P1), herein after], wherein the compound (P1) is an aroylphosphine oxide photoinitiator, preferably a non-polymerizable aroylphosphine oxide photoinitiator;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 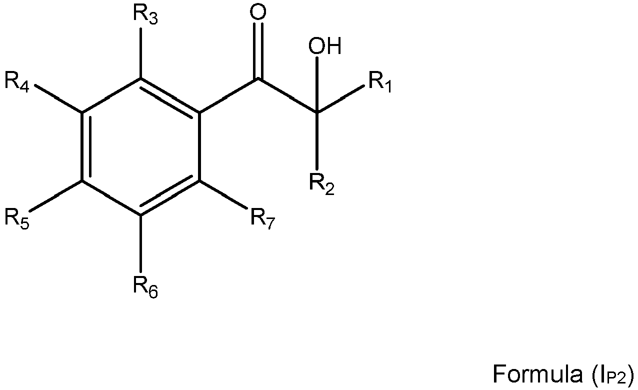 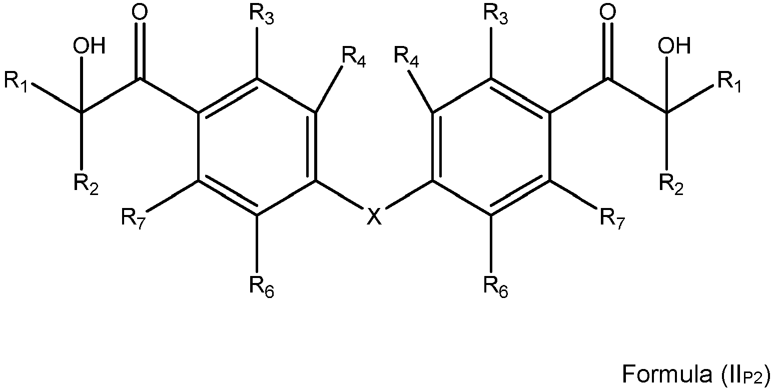 wherein
   - each of X is independently selected from CH₂, or O;
   - each of R₁, and R₂, equal to or different from each other and at each occurrence, is independently selected from the group consisting of methyl, ethyl, propyl, and isopropyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, ethyl, propyl, isopropyl, hydroxymethyl, 2-hydroxyethyl, 2-hydroxypropyl, 3-hydroxypropyl, 2-hydroxybutyl, 3-hydroxybutyl, 4-hydroxybutyl, and ORs, and wherein R₈ is independently selected from the group consisting of hydrogen, methyl, ethyl, propyl, isopropyl, hydroxymethyl, 2-hydroxyethyl, 3-hydroxypropyl, and 4-hydroxybutyl;
- equal to or less than 5.00 wt. % of at least one radically polymerizable (meth)acrylic-functionalized compound different from the compound (P1);
- from 0.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- from 0.00 to 11.00 wt. % of at least one ingredient (Ic), as detailed above, wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 65.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 45.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9, 11, 13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9, 11, 13-trienoic acid);
   wherein the triglyceride oil composition optionally further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above;
- from 0.50 to 10.00 wt. % of at least one acylphosphine oxide photoinitiator [compound (P1), herein after], wherein the compound (P1) is a benzoylphosphine oxide photoinitiator, preferably a non-polymerizable benzoylphosphine oxide photoinitiator;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 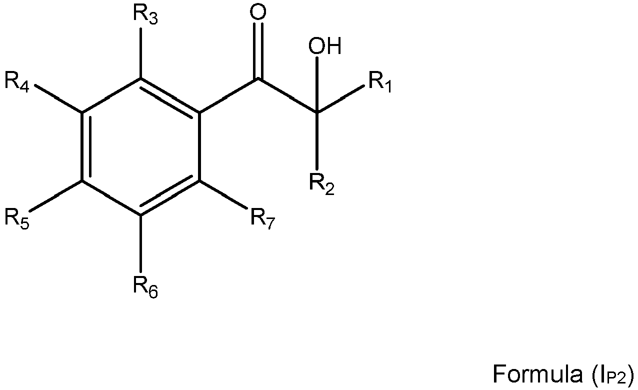 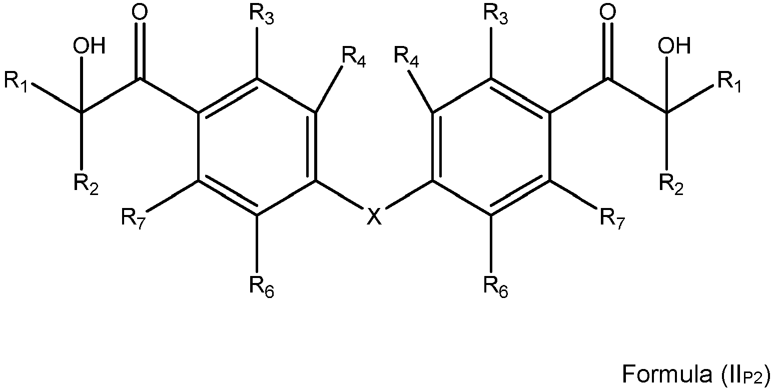 wherein
   - each of X is independently selected from CH₂, or O;
   - each of R₁, and R₂, equal to or different from each other and at each occurrence, is independently selected from methyl, or ethyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl;
- equal to or less than 5.00 wt. % of at least one radically polymerizable (meth)acrylic-functionalized compound different from the compound (P1);
- from 0.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- from 0.00 to 11.00 wt. % of at least one ingredient (Ic), as detailed above, wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 65.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 45.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z,*11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9, 11, 13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition optionally further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, as detailed above;
- from 0.50 to 10.00 wt. % of at least one acylphosphine oxide photoinitiator [compound (P1), herein after], wherein the compound (P1) is a benzoylphosphine oxide photoinitiator, preferably a non-polymerizable benzoylphosphine oxide photoinitiator;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 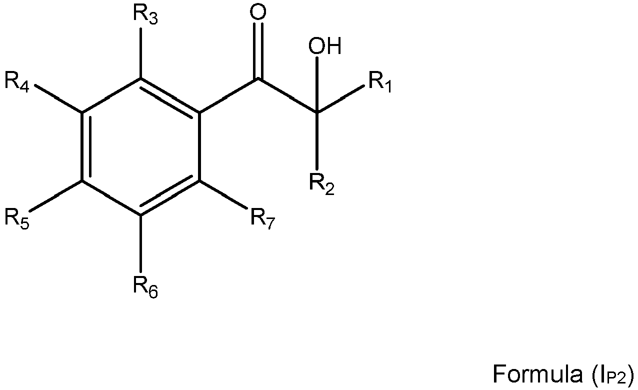 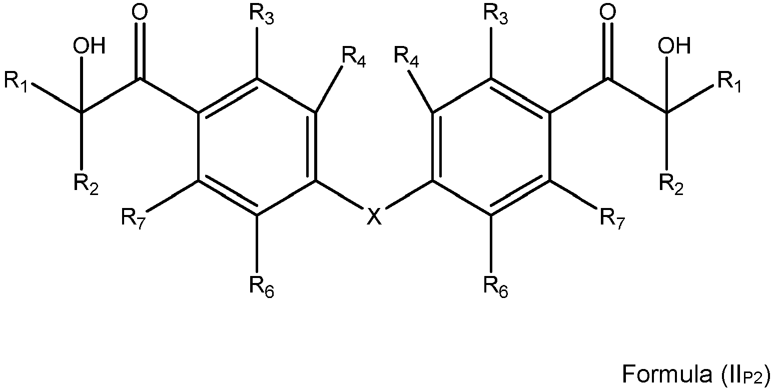 wherein
   - each of X is independently selected from CH₂, or O;
   - each of R₁, and R₂, equal to or different from each other and at each occurrence, is independently selected from methyl, or ethyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, ethyl, hydroxymethyl, 2-hydroxyethyl, and ORs, and wherein R₈ is independently selected from the group consisting of hydrogen, methyl, ethyl, hydroxymethyl, 2-hydroxyethyl, and 3-hydroxypropyl;
- equal to or less than 5.00 wt. % of at least one radically polymerizable (meth)acrylic-functionalized compound different from the compound (P1);
- from 0.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- from 0.00 to 11.00 wt. % of at least one ingredient (Ic), as detailed above, wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 50.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9, 11, 13-trienoic acid), α-licanic acid (4-oxo-(9Z,11E,13E)-octadeca-9,11,13-trienoic acid or 4-oxo-α-eleostearic acid), jacaric acid ((8Z,10E,12Z)-octadeca-8,10,12-trienoic acid), and catalpic acid ((9*E*,11*E*,13*Z*)-octadeca-9, 11, 13-trienoic acid);
   wherein the triglyceride oil composition further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.50 to 10.00 wt. % of at least one acylphosphine oxide photoinitiator [compound (P1), herein after], wherein the compound (P1) is a benzoylphosphine oxide photoinitiator selected from the group consisting of diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; and bis(2,4,6-trimethylbenzoyl)(2,4-dipentyloxyphenyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 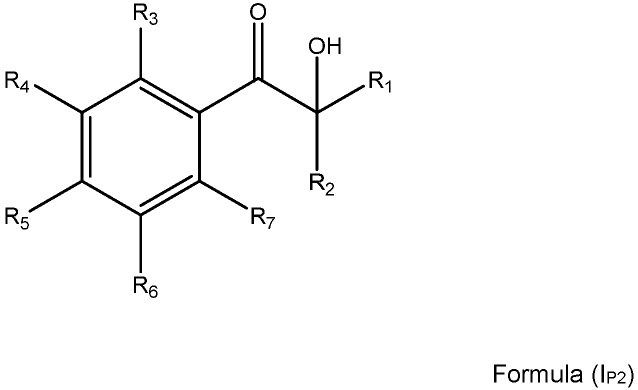 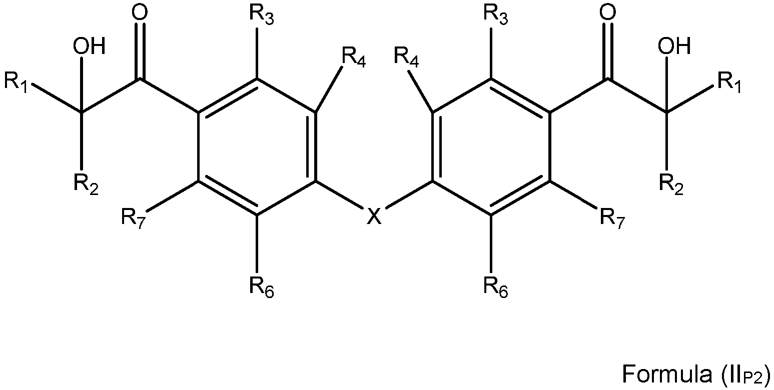 wherein
   - each of X is independently selected from CH₂, or O;
   - each of R₁, and R₂, equal to or different from each other and at each occurrence, is methyl; or wherein R₁ and R₂ can together form a C₅-₆ cycloalkyl;
   - each of R₃, R₄, R₅, R₆, and R₇, equal to or different from each other and at each occurrence, is independently selected from the group consisting of hydrogen, methyl, and ORs, and wherein R₈ is independently selected from methyl, or 2-hydroxyethyl;
- equal to or less than 5.00 wt. % of at least one radically polymerizable (meth)acrylic-functionalized compound different from the compound (P1);
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 50.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition further comprises, relative to the total weight of all fatty acid residues in the triglyceride oil composition, from 10.00 to 40.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca);
   wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.50 to 10.00 wt. % of at least one acylphosphine oxide photoinitiator [compound (P1), herein after], wherein the compound (P1) is a benzoylphosphine oxide photoinitiator selected from the group consisting of diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; and bis(2,4,6-trimethylbenzoyl)(2,4-dipentyloxyphenyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 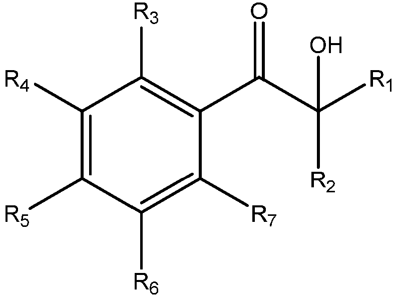 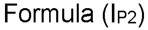 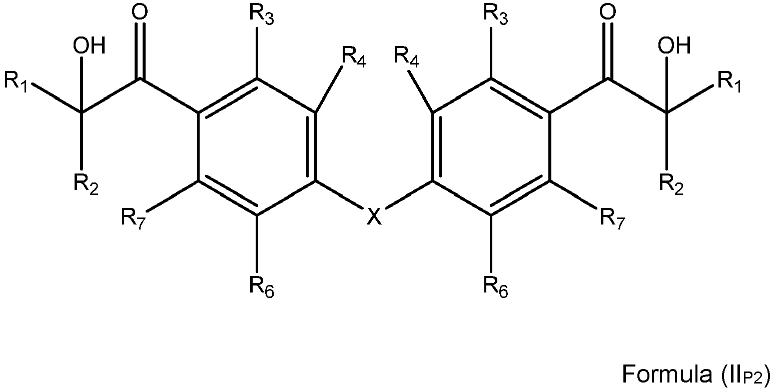 wherein
   - each of X is independently selected from CH₂, or O;
   - each of R₁, and R₂, equal to or different from each other and at each occurrence, is methyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, and ORs, and wherein R₈ is independently selected from methyl, or 2-hydroxyethyl;
- equal to or less than 5.00 wt. % of at least one radically polymerizable (meth)acrylic-functionalized compound different from the compound (P1);
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 90.00 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, comprises, or consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 55.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9Z,11E,13E)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8Z,10E,12Z)-octadeca-8,10,12-trienoic acid), and catalpic acid ((9*E*,11*E*,13*Z*)-octadeca-9,11,13-trienoic acid);
   wherein the triglyceride oil composition further comprises, relative to the total weight of all fatty acid residues in the triglyceride oil composition, from 11.00 to 35.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition optionally comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.60 to 8.00 wt. % of at least one acylphosphine oxide photoinitiator [compound (P1), herein after], wherein the compound (P1) is a benzoylphosphine oxide photoinitiator selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.6 to 9.0; 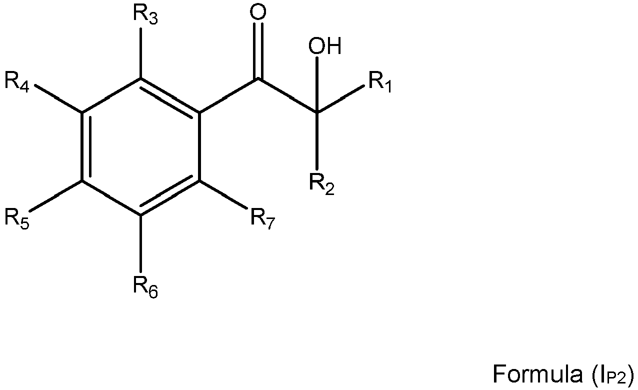 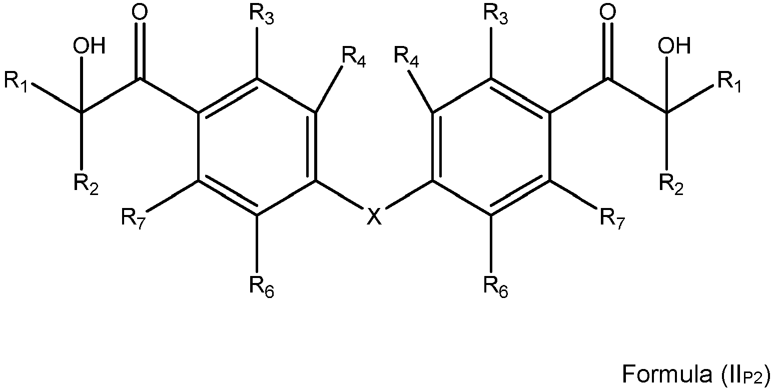 wherein
   - each of X is independently selected from CH₂, or O;
   - each of R₁, and R₂, equal to or different from each other and at each occurrence, is methyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, and ORs, and wherein R₈ is independently selected from methyl, or 2-hydroxyethyl;
- equal to or less than 5.00 wt. % of at least one radically polymerizable (meth)acrylic-functionalized compound different from the compound (P1);
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 92.50 wt. %, relative to the total weight of the composition (C), and wherein the total solids content of the composition (C) is measured according to the standard ASTM D2369 - 20.

According to a more preferred embodiment of the composition (C) of the present invention, the composition (C), as detailed above, consists essentially of, relative to the total weight of the composition (C):
- from 70.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 55.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9, 11, 13-trienoic acid), and α-licanic acid (4-oxo-(9*Z*,11*E*,13*E*)-octadeca-9,11,13-trienoic acid or 4-oxo-α-eleostearic acid);
   wherein the triglyceride oil composition further comprises, relative to the total weight of all fatty acid residues in the triglyceride oil composition, from 11.00 to 35.00 wt. % of at least one fatty acid residue having at least two non-conjugated double bonds, wherein the at least two non-conjugated double bonds are separated by a methylene CH₂ group, and wherein said at least one fatty acid residue has a non-conjugated moiety selected from 1,4-pentadiene or 1,4,7-octatriene;
   wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.60 to 8.00 wt. % of at least one acylphosphine oxide photoinitiator [compound (P1), herein after], wherein the compound (P1) is a benzoylphosphine oxide photoinitiator selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.6 to 9.0; 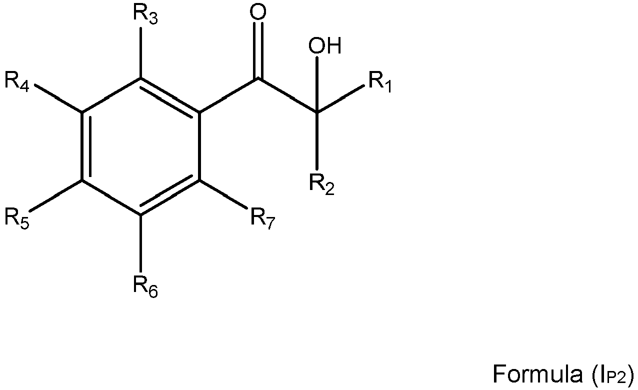 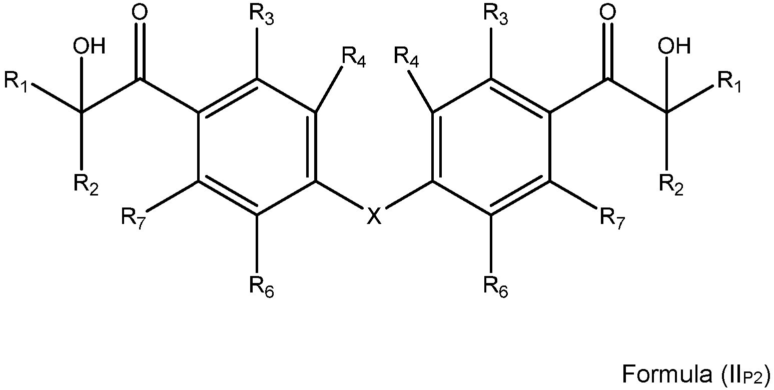 wherein
   - each of X is independently selected from CH₂, or O;
   - each of R₁, and R₂, equal to or different from each other and at each occurrence, is methyl; or wherein R₁ and R₂ can together form a C₅₋₆ cycloalkyl;
   - each of R₃, R₄, R₅, R₆, and R₇, equal to or different from each other and at each occurrence, is independently selected from the group consisting of hydrogen, methyl, and ORs, and wherein R₈ is independently selected from methyl, or 2-hydroxyethyl;
- equal to or less than 5.00 wt. % of at least one radically polymerizable (meth)acrylic-functionalized compound different from the compound (P1);
- optionally from 2.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (I_{C}), as detailed above,
wherein the composition (C) has a total solids content equal to or greater than 92.50 wt. %, relative to the total weight of the composition (C), and wherein the total solids content of the composition (C) is measured according to the standard ASTM D2369 - 20.

According to an even more preferred embodiment of the composition (C) of the present invention, the composition (C), as detailed above, comprises, or consists essentially of, relative to the total weight of the composition (C):
- from 75.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid);
   wherein the triglyceride oil composition further comprises, relative to the total weight of all fatty acid residues in the triglyceride oil composition, from 12.00 to 30.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition optionally further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.70 to 6.00 wt. % of at least one acylphosphine oxide photoinitiator [compound (P1), herein after], wherein the compound (P1) is a benzoylphosphine oxide photoinitiator selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.7 to 8.0; 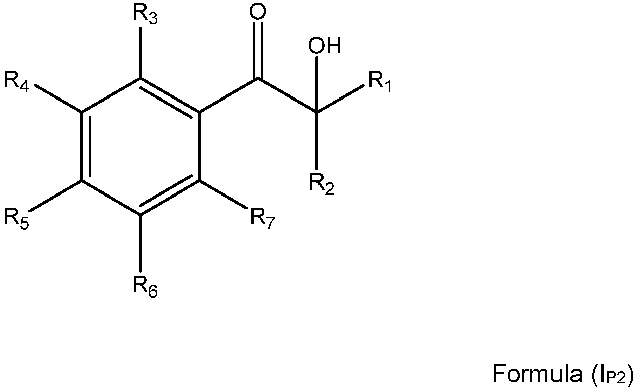 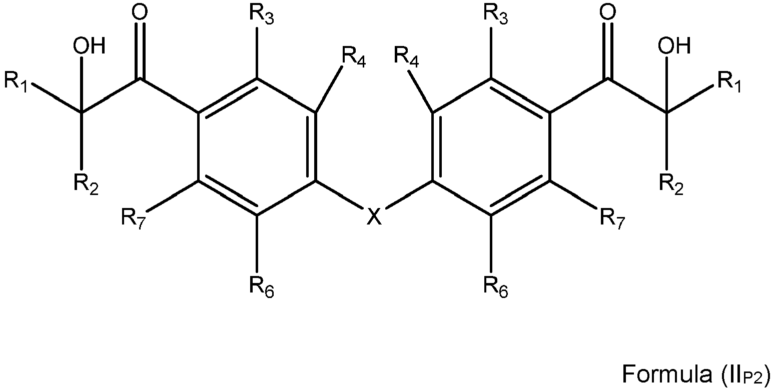 wherein
   - each of X is independently selected from CH₂, or O;
   - each of R₁, and R₂, equal to or different from each other and at each occurrence, is methyl;
   - each of R₃, R₄, Rs, R₆, and R₇, equal to or different from each other and at each occurrence, is hydrogen;
- equal to or less than 5.00 wt. % of at least one radically polymerizable (meth)acrylic-functionalized compound different from the compound (P1);
- optionally from 5.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 95.00 wt. %, relative to the total weight of the composition (C), and wherein the total solids content of the composition (C) is measured according to the standard ASTM D2369 - 20.

According to an even more preferred embodiment of the composition (C) of the present invention, the composition (C), as detailed above, consists essentially of, relative to the total weight of the composition (C):
- from 75.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 85.00 wt. % of at least one fatty acid residue having at least three conjugated double bonds, wherein said at least one fatty acid residue is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10E,12Z)-octadeca-8,10,12-trienoic acid), and β-calendic acid ((8*E*,10*E*,12E)-octadeca-8,10,12-trienoic acid);
   wherein the triglyceride oil composition further comprises, relative to the total weight of all fatty acid residues in the triglyceride oil composition, from 12.00 to 30.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.70 to 6.00 wt. % of at least one acylphosphine oxide photoinitiator [compound (P1), herein after], wherein the compound (P1) is a benzoylphosphine oxide photoinitiator selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.7 to 8.0; 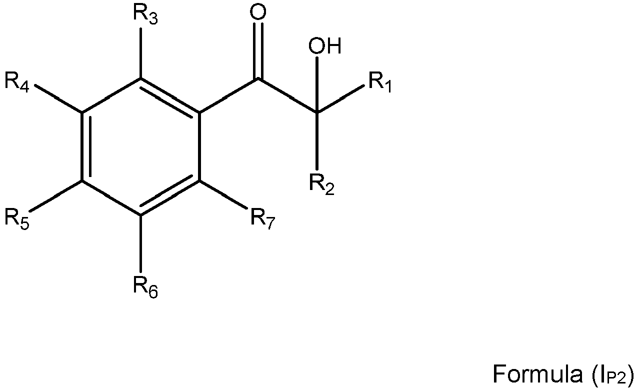 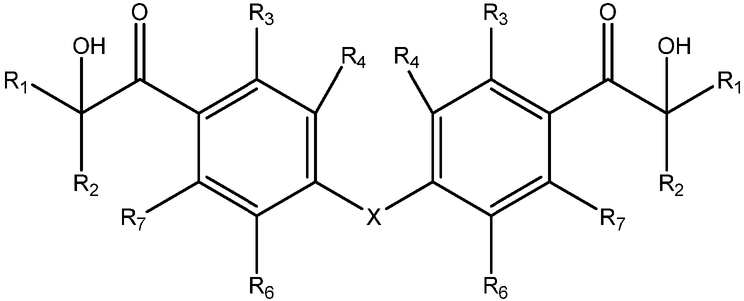 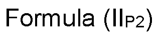 wherein
   - each of X is independently selected from CH₂, or O;
   - each of R₁, and R₂, equal to or different from each other and at each occurrence, is methyl;
   - each of R₃, R₄, R₅, R₆, and R₇, equal to or different from each other and at each occurrence, is hydrogen;
- equal to or less than 5.00 wt. % of at least one radically polymerizable (meth)acrylic-functionalized compound different from the compound (P1);
- optionally from 5.00 to 20.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 95.00 wt. %, relative to the total weight of the composition (C), and wherein the total solids content of the composition (C) is measured according to the standard ASTM D2369 - 20.

According to a yet even more preferred embodiment of the composition (C) of the present invention, the composition (C), as detailed above, comprises, or consists essentially of, relative to the total weight of the composition (C):
- from 75.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 60.00 to 75.00 wt. % of at least one fatty acid residue having at least three conjugated double bonds, wherein said at least one fatty acid residue is a conjugated triene fatty acid residue selected from the group consisting of fatty acid residues of α-eleostearic acid ((9Z,11E,13E)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), and β-calendic acid ((8*E*,10*E*,12*E*)-octadeca-8,10,12-trienoic acid);
   wherein the triglyceride oil composition further comprises, relative to the total weight of all fatty acid residues in the triglyceride oil composition, from 13.00 to 25.00 wt. % of at least one fatty acid residue having at least two non-conjugated double bonds, wherein the at least two non-conjugated double bonds are separated by a methylene CH₂ group, wherein said at least one fatty acid residue has a non-conjugated moiety selected from 1,4-pentadiene or 1,4,7-octatriene, and wherein said at least one fatty acid residue is selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid);
   wherein the triglyceride oil composition comprises at least one first drying oil, said at least one first drying oil comprising the at least one fatty acid residue having at least three conjugated double bonds, and wherein the at least one first drying oil is selected from tung oil, or calendula seed oil; and
   wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, and walnut oil;
- from 0.01 to 2.00 wt. % of at least one metal-based drying agent, wherein the at least one metal-based drying agent is a metal-based salt wherein the metal cation component is selected from the group consisting of manganese (Mn), iron (Fe), and cobalt (Co); wherein the anion component is selected from the group consisting of halides, acetoacetonates, and carboxylates such as naphthenates, linoleates, octoates, ethylhexanoates such as 2-ethylhexanoate, decanoates, neodecanoates, and dodecanoates; and wherein the metal-based salt is optionally complexed with at least one nitrogen donor ligand selected from the group consisting of monodentate, bidentate, tridentate, tetradentate, pentadentate, and hexadentate nitrogen donor ligands;
- from 0.80 to 4.00 wt. % of at least one acylphosphine oxide photoinitiator [compound (P1), herein after], wherein the compound (P1) is a benzoylphosphine oxide photoinitiator selected from bis(4-methylphenyl)(2,4,6-trimethylbenzoyl)phosphine oxide; or phenylbis(2,4,6-trimethylbenzoyl)phosphine oxide;
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.8 to 7.0; 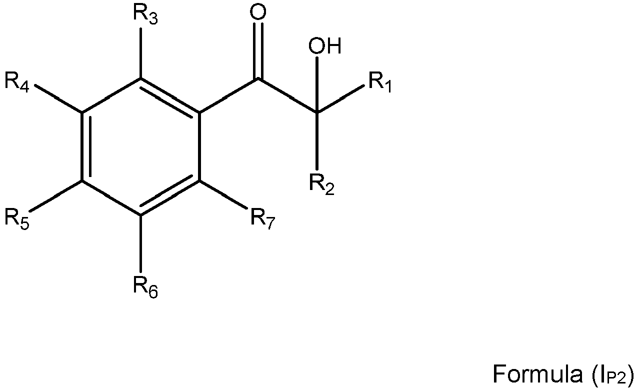 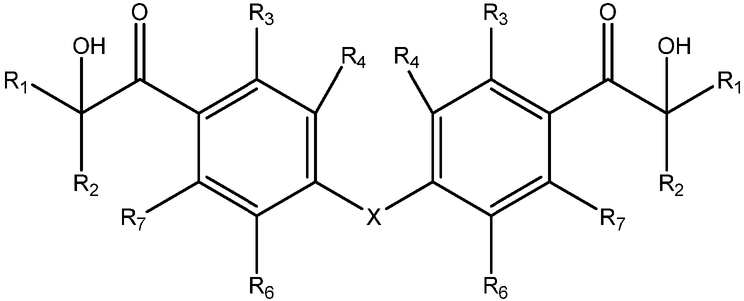 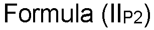 wherein
   - each of X is independently selected from CH₂, or O;
   - each of R₁, and R₂, equal to or different from each other and at each occurrence, is methyl;
   - each of R₃, R₄, R₅, R₆, and R₇, equal to or different from each other and at each occurrence, is hydrogen;
- equal to or less than 5.00 wt. % of at least one radically polymerizable (meth)acrylic-functionalized compound different from the compound (P1);
- optionally from 5.00 to 15.00 wt. % of at least one micronized wax [micronized wax (Mₚ), herein after] having a particle size D₉₀ equal to or less than 36 µm and a particle size D₅₀ equal to or less than 20 µm;
- from 0.00 to 20.00 of at least one pigment, as detailed above; and
- optionally from 0.10 to 11.00 wt. % of at least one ingredient (Ic), as detailed above,
wherein the composition (C) has a total solids content equal to or greater than 97.00 wt. %, relative to the total weight of the composition (C), and wherein the total solids content of the composition (C) is measured according to the standard ASTM D2369 - 20.

For the purpose of the present invention, the expression "consists essentially of" is intended to denote that, relative to the total weight of the composition (C), any additional ingredient different from the triglyceride oil composition, as detailed above, the at least one metal-based drying agent, as detailed above, the at least one compound (P1), as detailed above, the at least one compound (P2) according to general Formula (I_{P2}) or according to general Formula (II_{P2}), as detailed above, and, when present, the at least one micronized wax (Mₚ), as detailed above, and, when present, the at least one pigment, as detailed above, and, when present, the at least one ingredient (Ic), as detailed above, is present in minor amounts in said composition (C), being understood that these latter do not substantially modify the properties of said composition (C).

Another aspect of the present invention is a method for the manufacturing of the composition (C), as detailed above.

It is further understood that all definitions and preferences, as described above, equally apply for all further embodiments, as described below.

The composition (C) of the present invention can be manufactured by a variety of methods known in the art. For manufacturing composition (C) of the present invention, several methods known in the art may adequately be used.

In one embodiment of the present invention, the method for the manufacturing of the composition (C), as detailed above, comprises intimate admixing of the triglyceride oil composition, as detailed above, the at least one metal-based drying agent, as detailed above, the at least one compound (P1), as detailed above, the at least one compound (P2) according to general Formula (I_{P2}) or according to general Formula (II_{P2}), as detailed above, optionally the at least one micronized wax (Mₚ), as detailed above, optionally the at least one pigment, as detailed above, and optionally the at least one additional ingredient (Ic), as detailed above.

According to one embodiment of the present invention, the method for the manufacturing of the composition (C), as detailed above, comprises the following steps of intimate admixing:
- from 60.00 to 99.00 % wt. % of a triglyceride oil composition, as detailed above;
- from 0.01 to 2.00 wt. % of at least one metal-based drying agent, as detailed above;
- from 0.50 to 10.00 wt. % of at least one compound (P1), as detailed above;
- at least one compound (P2) according to general Formula (I_{P2}) or according to general Formula (II_{P2}), as detailed above, wherein the compound (P2) is present in an amount as determined by a weight ratio of compound (P2) to compound (P1) ranging from 0.5 to 10.0;
- optionally at least one micronized wax (Mₚ), as detailed above;
- optionally at least one pigment, as detailed above;
- optionally at least one ingredient (I_{C}), as detailed above;
wherein all wt. % are relative to the total weight of the composition (C), and wherein the admixing of the at least one micronized wax (Mₚ), when present, is carried out at a temperature lower than the melting point of said micronized wax (Mₚ).

According to one embodiment of the method for the manufacturing of the composition (C) of the present invention, as detailed above, the triglyceride oil composition, as detailed above, is prepared from at least one first drying oil, as detailed above, and wherein said at least one first drying oil is optionally further admixed with at least one second drying oil, as detailed above. Within the context of the present invention, it is understood that the at least one second drying oil may but does not need to be admixed with the first drying oil prior to admixing with the other constituent components of the composition (C).

According to a preferred embodiment of the method for the manufacturing of the composition (C) of the present invention, as detailed above, the triglyceride oil composition, as detailed above and as comprised in the composition (C), is prepared by admixing at least one first drying oil, as detailed above, and at least one second drying oil, as detailed above.

Generally said intimate admixing, as detailed above, may be carried out by using traditional mixers and blenders, high intensity mixers and electric stirrers, said mixers, blenders and stirrers which can be equipped with at least one dispersion disk.

Non-limiting examples of high intensity mixers notably include those high intensity mixers as commercially available from Dispermill, and from ROSS Mixers.

Non-limiting examples of dispersion disks notably include those dispersion disks as commercially available from Dispermill.

It is understood that the skilled person in the art will carry out said intimate admixing according to general practice such as notably using optimal times, speeds, weights, volumes and batch quantities.

Furthermore, it is understood that any order of intimate admixing of the various components as comprised in the composition (C), as detailed above, is acceptable.

Another aspect of the present invention is a method for treating a surface or at least part of a surface of a wood product wherein said wood product is treated with the composition (C), as detailed above.

It is further understood that all definitions and preferences, as described above, equally apply for all further embodiments, as described below.

It is further understood that when a surface or at least part of a surface of a wood product is treated with the composition (C), as detailed above, the composition (C) can harden or cure through photoassisted oxypolymerization upon exposure to the combination of visible light irradiation, such as visible light irradiation of the wavelength in the range of 380 nm to 750 nm, and molecular oxygen, as described above. Exposure to visible light irradiation can be achieved, for example, by indoor lighting sources such as daylight through glazing, LED lamps, or TL lamps providing the visible light.

As non-limiting examples of suitable wood products mention may be made of decking; siding; siding cladding; roof shingles; furniture; veneer; flooring; wood-based composite panels such as particle board (PB), hardboard, plywood, oriented strand board (OSB), flake board, chipboard and fibreboard such as medium density fibreboard (MDF), and high density fibreboard (HDF).

In general, the method for treating the surface or at least part of the surface of the wood product is not limited to wood products made of a particular type of wood.

Non-limiting examples of suitable types of wood notably include i. hardwood such as woods from dicotyledonous trees such as ash, mahogany, troko, beech, oak, maple, birch, walnut, teak, alder, aspen, elm, gum, poplar or willow, ii. softwood such as woods from coniferous trees such as larch, pine, fir, Douglas fir, hemlock, redwood, or spruce, or iii. certain other lignocellulosic materials such as bamboo, or hemp.

As non-limiting examples, suitable hardwood floorings notably include solid hardwood flooring such as solid parquet, or engineered hardwood flooring such as engineered parquet.

Preferred wood products are chosen among furniture, solid hardwood flooring, or engineered hardwood flooring.

Among the suitable manners for applying the composition (C), as detailed above, to the surface or at least part of the surface of the wood products, as detailed above, mention can be notably made of conventional application methods known to those skilled in the art of wood coating compositions such as painting; spraying such as air-atomized spraying, air-assisted spraying and airless spraying; flow-coating; transfer-coating; roller coating; brushing; impregnating; dipping; spreading; curtain coating; and the like by using conventional equipment such as but not limited to a sprayer, a roller coating machine, a cloth, a brush, a sponge, a polishing machine with pads, and the like. Preferably, the composition (C) is applied to the surface or at least part of the surface of the wood products by spreading using a polishing machine with pads, or by spreading or impregnating using a sponge, a brush, or a cloth.

In general, after applying the composition (C), as detailed above, to the surface or at least part of the surface of the wood products, as detailed above, the applied composition (C) may then be finally polished during at least one polishing step. The at least one polishing step can for instance be performed manually, for example by using a cloth, or by using a polishing machine with pads. In case of any excess of the applied composition (C) is present on the surface or at least part of the surface of the wood products, said excess should be removed within an appropriate timeframe during at least one removal step. The at least one removal can for instance be performed manually, for example by using a cloth, or by using a polishing machine with pads.

If desired, prior to application of the composition (C), as detailed above, the surface or at least part of the surface of the wood products is preliminary roughened up, such as by mechanical abrasion.

The composition (C) can be applied to the surface or at least part of the surface of wood products in low amounts, for instance in an amount (wet basis) from 5.0 gram per square meter [g/m², herein after] to 50.0 g/m², preferably from 5.0 g/m² to 40.0 g/m², preferably from 10.0 to 20.0 g/m², thereby resulting in thin coated layers, for instance with an average thickness from 5.0 to 50.0 micron, preferably from 5.0 to 40.0 micron, after drying and curing.

Another aspect of the present invention is a coated layer obtained by the method for treating the surface or at least part of the surface of the wood product, as detailed above, wherein said wood product is treated with the composition (C), as detailed above.

It is further understood that all definitions and preferences, as described above, equally apply for all further embodiments, as described below.

The inventors have surprisingly found that by treating the surface or at least part of the surface of wood products with the composition (C) of the present invention, as detailed above, the resulting coated layer now demonstrates a rapid hardness build-up while at least maintaining good film formation properties, i.e. without jeopardizing or impairing film formation, and mechanical properties in terms of hardness, as demonstrated in the experimental section. In particular, in combination with a rapid hardness build-up and good film formation properties, the inventors have surprisingly found that when the high-solids composition (C) of the present invention is applied to wood products and thereby resulting in coated layers of said composition (C) on said wood products, a sufficiently high hardness can be readily obtained within a few days of application, or even after 24 hours of application, and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

The application of the composition (C) to the surface or at least part of the surface of wood products can result in thin coated layers, for instance coated layers with an average thickness from 5.0 to 50.0 micron, preferably from 5.0 to 40.0 micron, after drying and curing.

Another aspect of the present invention is a use of the composition (C), as detailed above, in the method for treating the surface or at least part of the surface of the wood product, as detailed above.

It is further understood that all definitions and preferences, as described above, equally apply for all further embodiments, as described below.

According to one embodiment of the composition (C) of the present invention, the composition (C), as detailed above, is a one-part system or a single-part system, for example stored as such in a container or a can, for example a metal can, as the one part.

Advantageously, the composition (C), as detailed above, is storage-stable, i.e. said composition (C) can be stored over a period of several months to a year and longer without changing to an extent relevant to its use with respect to its application properties or its properties after oxidative drying.

In a one-part system, the composition (C), as detailed above, may for instance be manufactured right before the introduction of said composition (C) in said one part. Alternatively, in a one-part system, the composition (C), as detailed above, may for instance be manufactured by adding the triglyceride oil composition, as detailed above, the at least one metal-based drying agent, as detailed above, the at least one compound (P1), as detailed above, the at least one compound (P2) according to general Formula (I_{P2}) or according to general Formula (II_{P2}), as detailed above, optionally the at least one micronized wax (Mₚ), as detailed above, optionally the at least one pigment, as detailed above, and optionally the at least one additional ingredient (I_{C}), as detailed above, to said one part, thereby forming the composition (C) inside said one part.

If desired, instead of storing the composition (C), as detailed above, as a one-part system, the composition (C), as detailed above, is a multi-part system comprising at least two complementary parts, said at least two complementary parts being a first complementary part and a second complementary part and optionally one or more further complementary parts, such as a two-part system consisting of the first complementary part and the second complementary part, wherein said at least two complementary parts are configured to be mixed so as to formulate the composition (C), and wherein the constituent components of the composition (C) are divided over said at least two complementary parts, wherein said at least two complementary parts are unmixed and physically separated and packaged, for example either in separate containers or in separate compartments of a single container. For said multi-part system, the mixing of the at least two complementary parts is performed at the moment of application when the first complementary part of said at least two complementary parts and the second complementary part of said at least two complementary parts and optionally the one or more further complementary parts are mixed thereby forming the composition (C).

### EXAMPLES

The invention will be now described in more details with reference to the following examples, whose purpose is merely illustrative and not intended to limit the scope of the invention. All mixing ratios, contents and concentrations in this text are given in units of weight and percent by weight unless otherwise stated.

### General analytical test methods

### Hardness of the composition (C)

### Via pencil Gouge hardness:

The measurements regarding the pencil Gouge hardness of the composition (C) of the present invention, as detailed above, were performed according to the standard ASTM D3363-20 whereby the following method and measurement parameters were additionally taken into account:
- the composition (C) was applied to a Form P123-10N Leneta White Scrub Test Panel, commercially available from Leneta, using a suitable wire bar until a wet layer thickness of 8 ± 1 µm was obtained (i.e. on a wet basis); and
- pencils were used commercially available from Mitsubishi.

The pencil Gouge hardness is defined by the hardest pencil that will leave the coated layer of the composition (C) uncut for a stroke length distance of at least 3.2 mm (1/8 inch).

The experimentally determined values of the pencil Gouge hardness were expressed according to the following scale ascending from softest to hardest: 6B, 5B, 4B, 3B, 2B, B, HB, F, H, 2H, 3H, 4H, 5H, 6H, 7H, 8H, and 9H.

Within the context of the present invention, the following two types of measurements with respect to the pencil Gouge hardness of the composition (C) of the present invention were carried out as follows:
i. the hardness build-up time required for the samples to achieve or reach a pencil Gouge hardness equal to B was recorded while the samples were dried and cured at a temperature of 20 °C and a relative humidity of 50 % and exposed to visible light irradiation from a LED lamp (white light, 6000 K) at a luminous intensity equal to 400 lumen; and
ii. the samples were dried and cured for 24 hours at a temperature of 20 °C and a relative humidity of 50 % and exposed to visible light irradiation from a LED lamp (white light, 6000 K) at a luminous intensity equal to 400 lumen, and then the pencil Gouge hardness was measured.

### Film Formation

The measurements regarding the film formation of the composition (C) of the present invention, as detailed above, were carried out as follows:
- the composition (C) was applied to a Form P123-10N Leneta White Scrub Test Panel, commercially available from Leneta, using a suitable wire bar until a wet layer thickness of 8 ± 1 µm was obtained (i.e. on a wet basis), at a temperature of 20 °C and a relative humidity of 50 % and exposed to visible light irradiation from a LED lamp (white light, 6000 K) at a luminous intensity equal to 400 lumen;
- a manual analysis was performed after every period of 10 minutes by touching the film of the applied composition (C) to assess whether it was still liquid or had solidified; and
- the time of solidification was recorded as the film formation time.

**Table 1: components used in the compositions of the Examples and in the compositions of the Comparative Examples**

| **Triglyceride oil composition** | **Company** | **Description** |
|---|---|---|
| first drying oil: tung oil | Mosselman | raw (untreated); fatty acid residue content: see [1] |
| second drying oil: linseed oil | Linagro | raw (untreated); fatty acid residue content: see [2] |

| **Metal-based drying agent** | **Company** | **Description** |
|---|---|---|
| ADDITOL^{®} dry CF103 | Allnex | manganese(Mn)-based drying agent |

| **Acylphosphine oxide photoinitiator compound (P1)** | **Company** | **Description** |
|---|---|---|
| BAPO phenylbis(2,4,6-trimethylbenzoyl)phosphine oxide | IGM Resins | CAS: 162881-26-7 |
| TMO bis(4-methylphenyl)(2,4,6-trimethylbenzoyl)phosphine oxide | Lift Chemical Technology Co., LTD. | CAS: 270586-78-2 |

| **α-Hydroxyalkylphenone photoinitiator compound (P2) according to general Formula (I_{P2})** | **Company** | **Description** |
|---|---|---|
| Omnirad 1173 2-hydroxy-2-methylpropiophenone (R₁ = R₂ = methyl; R₃ = R₄ = R₅ = R₆ = R₇ = hydrogen) | IGM Resins | CAS: 7473-98-5 |

| | | |
|---|---|---|
| [1] fatty acid residue content of tung oil as the first drying oil, relative to the total weight of all fatty acid residues in tung oil: 81.28 wt. % of the fatty acid residue of eleostearic acid; 7.82 wt. % of the fatty acid residue of linoleic acid; 5.95 wt. % of the fatty acid residue of oleic acid; and 4.95 wt. % of saturated fatty acid residues (e.g. the fatty acid residue of palmitic acid). [2] fatty acid residue content of linseed oil as the second drying oil, relative to the total weight of all fatty acid residues in linseed oil: 16.02 wt. % of the fatty acid residue of linoleic acid; 53.67 wt. % of the fatty acid residue of α-linolenic acid; 19.22 wt. % of the fatty acid residue of oleic acid; and 11.09 wt. % of saturated fatty acid residues (e.g. the fatty acid residues of palmitic acid and stearic acid). | | |

### General procedure for manufacturing the composition (C) according to the present invention:

Reference is hereby made to the above Table 1 with respect to the various components used in the compositions of the Examples and used in the compositions of the Comparative Examples. The exact compositions of the Examples and of the Comparative Examples, with respect to the type of components contained therein and the related quantities thereof, are described in Table 2 below.

The compositions of the Examples and the compositions of the Comparative Examples, as listed in Table 2 below, were respectively prepared by admixing and homogenizing for 5 minutes using a high intensity mixer, the mixer being equipped with a dispersion disk, at 20 °C and at atmospheric pressure.

**Table 2: High-solids wood coating compositions of the Examples 1 and 6 - 10 (Ex1 and Ex6 - Ex10) and Comparative Examples 2-5 (CEx2 - CEx5): Pencil Gouge hardness coated layer + Film Formation**

| **Highsolids wood coating compositions** | **Ex1** | **CEx2** | **CEx3** | **CEx4** | **CEx5** | **Ex6** | **Ex7** | **Ex8** | **Ex9** | **Ex10** |
|---|---|---|---|---|---|---|---|---|---|---|
| **Triglyceride oil composition** | **Amount (in wt. %, relative to the total weight of the composition)** | | | | | | | | | |
| *triglyceride oil composition A:* | 97.60 | 97.60 | 97.60 | 99.60 | 97.60 | 98.60 | 95.60 | 79.60 | 93.60 | 0.00 |
| 10000 wt. % tung oil (first drying oil) | | | | | | | | | | |
| *triglyceride oil composition 8:* | 0.00 | 0.00 | 0.00 | 0.00 | 0.00 | 0.00 | 0.00 | 0.00 | 0.00 | 93.60 |
| 80.00 wt. % tung oil (first drying oil) + 2000 wt. % linseed oil (second drying oil) | | | | | | | | | | |
| **Metal-based drying agent** | **Amount (in wt. %, relative to the total weight of the composition)** | | | | | | | | | |
| ADDITOL^{®} dry CF103 | 0.40 | 0.40 | 0.40 | 0.40 | 0.40 | 0.40 | 0.40 | 0.40 | 0.40 | 0.40 |
| **Acylphosphine oxide photoinitiator compound (P1)** | **Amount (in wt. %, relative to the total weight of the composition)** | | | | | | | | | |
| phenylbis(2,4,6-trimethylbenzoyl)phosphine oxide | 1.00 | 2.00 | 0.00 | 0.00 | 0.00 | 0.50 | 2.00 | 0.00 | 1.00 | 1.00 |
| bis(4-methylphenyl)(2,4,6-trimethylbenzoyl)phosphine oxide | 0.00 | 0.00 | 0.00 | 0.00 | 2.00 | 0.00 | 0.00 | 10.00 | 0.00 | 0.00 |
| **α-Hydroxyalkylphenone photoinitiator compound (P2) according to general Formula (I_{P2})** | **Amount (in wt. %, relative to the total weight of the composition)** | | | | | | | | | |
| 2-hydroxy-2-methylpropiophenone (R₁ = R₂ = methyl; R₃ = R₄ = R₅ = R₆ = R₇ = hydrogen) | 1.00 | 0.00 | 2.00 | 0.00 | 0.00 | 0.50 | 2.00 | 10.00 | 5.00 | 5.00 |
| | **Weight ratio of compound (P2) to compound (P1)** | | | | | | | | | |
| | 1.0 | / | / | / | / | 1.0 | 1.0 | 1.0 | 5.0 | 5.0 |
| | **Hardness build-up time required to achieve or reach a pencil Gouge hardness equal to B** | | | | | | | | | |
| | 2h30min | 4h00min | 6h00min | 6h00min | 5h00min | 3h20min | 2h30min | 2h30min | 2h30min | 2h00min |
| | **Pencil Gouge hardness after 24 hours** | | | | | | | | | |
| | **F** | **F** | **F** | **F** | **F** | **F** | **F** | **F** | **F** | **F** |
| | **Film formation time** | | | | | | | | | |
| | 1h00min | 2h00min | 3h00min | 3h00min | 2h30min | 1h30min | 45min | 1h30min | 1h00min | 30min |

The experimental results as shown in Table 2 clearly demonstrate that by using in the high-solids composition (C) of the present invention a defined amount of a triglyceride oil composition comprising a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, further in combination with a defined amount of a metal-based drying agent, a defined amount of phenylbis(2,4,6-trimethylbenzoyl)phosphine oxide or bis(4-methylphenyl)(2,4,6-trimethylbenzoyl)phosphine oxide as an acylphosphine oxide photoinitiator compound (P1), and a defined amount of 2-hydroxy-2-methylpropiophenone as an α-hydroxyalkylphenone photoinitiator compound (P2), the defined amount of said compound (P1) now synergistically interacts with the defined amount of said compound (P2), thereby resulting in environmentally friendly and easy to apply high-solids compositions (C) being visible light-hardenable or -curable through photoassisted oxypolymerization and now having a rapid hardness build-up while at least maintaining good film formation properties, i.e. without jeopardizing or impairing film formation, and good mechanical properties in terms of hardness upon application of said compositions (C) to wood products and thereby resulting in coated layers of said compositions (C) on said wood products. In particular, in combination with a rapid hardness build-up and good film formation properties, the experimental results as shown in Table 2 clearly demonstrate that when the high-solids composition (C) is applied to wood products and thereby resulting in coated layers of said composition (C) on said wood products, a sufficiently high hardness can be readily obtained within 24 hours of application and without any further need or use of one or more isocyanate-based accelerators which are known to those skilled in the art of wood coating compositions to further improve the drying properties and kinetics of wood coating compositions (i.e. thereby obtaining a reduced drying time or an accelerated drying in presence of such one or more isocyanate-based accelerators).

The high-solids compositions (C) of the Examples Ex1 and Ex6 - Ex10 according to the present invention clearly demonstrate that the photoassisted oxypolymerization of these high-solids compositions can now be synergistically accelerated due to the synergistic interaction between the defined amounts of the two types of photoinitiators, i.e. on the one hand phenylbis(2,4,6-trimethylbenzoyl)phosphine oxide or bis(4-methylphenyl)(2,4,6-trimethylbenzoyl)phosphine oxide as the acylphosphine oxide photoinitiator compound (P1) and on the other hand 2-hydroxy-2-methylpropiophenone as the α-hydroxyalkylphenone photoinitiator compound (P2), thereby resulting in a synergistically enhanced or accelerated hardness build-up upon application of said compositions (C) to wood products and thereby resulting in coated layers of said compositions (C) on said wood products while at least maintaining good film formation properties, i.e. without jeopardizing or impairing film formation, and good mechanical properties in terms of hardness (Pencil Gouge hardness after 24 hours: F), and this without any use of one or more isocyanate-based accelerators.

The high-solids compositions of the Comparative Examples CEx2 - CEx5 in absence of one or both of phenylbis(2,4,6-trimethylbenzoyl)phosphine oxide or bis(4-methylphenyl)(2,4,6-trimethylbenzoyl)phosphine oxide as the acylphosphine oxide photoinitiator compound (P1); and 2-hydroxy-2-methylpropiophenone as the α-hydroxyalkylphenone photoinitiator compound (P2) are characterized by significantly higher hardness build-up times required to achieve or reach a pencil Gouge hardness equal to B. The presented experimental data clearly demonstrate the synergistic effect between the defined amount of phenylbis(2,4,6-trimethylbenzoyl)phosphine oxide or bis(4-methylphenyl)(2,4,6-trimethylbenzoyl)phosphine oxide as the acylphosphine oxide photoinitiator compound (P1), and the defined amount of 2-hydroxy-2-methylpropiophenone as the α-hydroxyalkylphenone photoinitiator compound (P2) to synergistically accelerate the photoassisted oxypolymerization of the high-solids compositions (C) according to the present invention.

In addition, the inventors have found that by using in the high-solids composition (C) a defined amount of a triglyceride oil composition further comprising, i.e. in addition to a defined amount of a fatty acid residue having at least three conjugated double bonds, particularly in the present examples said triglyceride oil composition originating from tung oil as a first drying oil comprising the fatty acid residue of α-eleostearic acid ((9*Z*,11*E*,13*E*)-octadeca-9,11,13-trienoic acid) as a conjugated triene fatty acid residue, a defined amount of a fatty acid residue having at least two non-conjugated double bonds wherein the at least two non-conjugated double bonds are separated by a methylene CH₂ group, particularly in the present examples said triglyceride oil composition further originating from linseed oil as a second drying oil comprising the fatty acid residue of linoleic acid ((9*Z*,12*Z*)-octadeca-9,12-dienoic acid) having a non-conjugated 1,4-pentadiene moiety and the fatty acid residue of α-linolenic acid ((9*Z*,12*Z*,15*Z*)-octadeca-9,12,15-trienoic acid) having a non-conjugated 1,4,7-octatriene moiety, these fatty acid residues now interact synergistically with each other, thereby resulting in the high-solids compositions (C) having improved film formation properties, i.e. a reduced film formation time and hence faster film formation, while at least maintaining a rapid hardness build-up and good mechanical properties in terms of hardness upon application of said compositions (C) to wood products and thereby resulting in coated layers of said compositions (C) on said wood products. Such improved film formation properties resulting from the synergistic interaction or cooperation between these fatty acid residues have the further advantage that the high-solids composition (C), in particular the resulting coated layer of said composition (C) after application to wood products, has reduced chances of being rapidly contaminated by dirt, dust, insects, and the like, which may become trapped in the coated layer while said coated layer is not (yet) solidified and still liquid.

In particular, upon comparison with the high-solids composition of the Example Ex9 in absence of linseed oil as the second drying oil, the high-solids composition of the Example Ex10 surprisingly demonstrates that the addition of linseed oil as the second drying oil comprising the fatty acid residue of linoleic acid ((9*Z*,12*Z*)-octadeca-9,12-dienoic acid) having a non-conjugated 1,4-pentadiene moiety and the fatty acid residue of α-linolenic acid ((9*Z*,12*Z*,15*Z*)-octadeca-9,12,15-trienoic acid) having a non-conjugated 1,4,7-octatriene moiety to a triglyceride oil composition already comprising tung oil as the first drying oil comprising the fatty acid residue of α-eleostearic acid ((9*Z*,11*E*,13*E*)-octadeca-9,11,13-trienoic acid) as a conjugated triene fatty acid residue, results in a synergistic interaction and cooperation between these characteristic fatty acid residues thereby resulting in the high-solids composition (C) having improved film formation properties, i.e. a reduced film formation time and hence faster film formation, while maintaining a rapid hardness build-up and good mechanical properties in terms of hardness upon application of said compositions (C) to wood products and thereby resulting in coated layers of said compositions (C) on said wood products.

## Claims

1. A high-solids wood coating composition [composition (C), herein after] comprising, relative to the total weight of the composition (C):
- from 60.00 to 99.00 % by weight [wt. %, herein after] of a triglyceride oil composition, wherein the triglyceride oil composition comprises, relative to the total weight of all fatty acid residues in the triglyceride oil composition, equal to or less than 15.00 wt. % of saturated fatty acid residues (SAFA) and from 30.00 to 85.00 wt. % of at least one fatty acid residue having at least three conjugated double bonds;
- from 0.01 to 2.00 wt. % of at least one metal-based drying agent;
- from 0.50 to 10.00 wt. % of at least one acylphosphine oxide photoinitiator [compound (P1), herein after]; and
- at least one α-hydroxyalkylphenone photoinitiator [compound (P2), herein after] according to general Formula (I_{P2}) or according to general Formula (II_{P2}), wherein the compound (P2) is present in an amount as determined by a weight ratio of compound (P2) to compound (P1) ranging from 0.5 to 10.0; 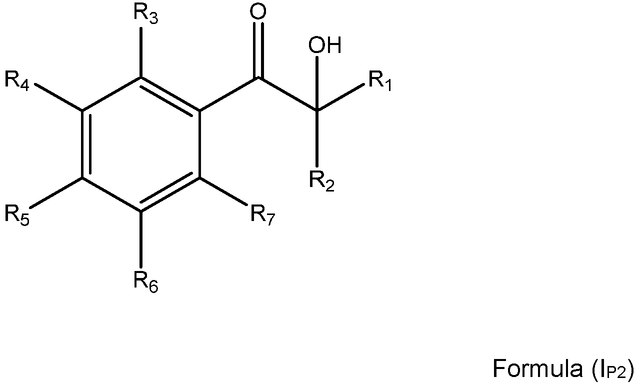 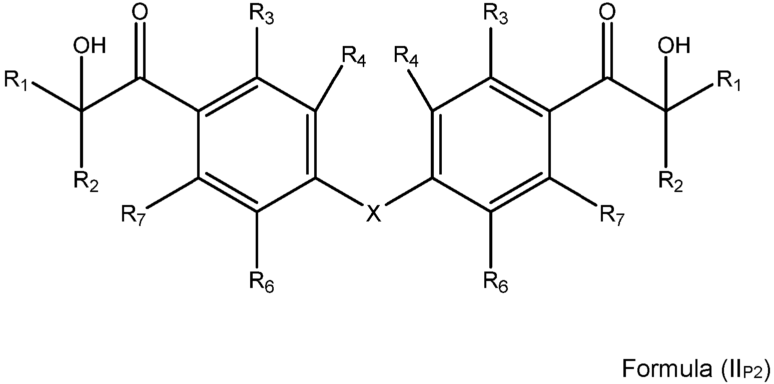 wherein
- each of X is independently selected from CH₂, or O;
- each of R₁, and R₂, equal to or different from each other and at each occurrence, is independently selected from C₁₋₄ alkyl; wherein R₁ and R₂ can together form a C₅₋₆ cycloalkyl;
- each of R₃, R₄, R₅, R₆, and R₇, equal to or different from each other and at each occurrence, is independently selected from the group consisting of hydrogen, C₁₋₄ alkyl, C₁₋₄ hydroxyalkyl, and ORs, and wherein R₈ is independently selected from the group consisting of hydrogen, C₁₋₄ alkyl, and C₁₋₄ hydroxyalkyl;
- equal to or less than 5.00 wt. % of at least one radically polymerizable (meth)acrylic-functionalized compound different from the compound (P1);
wherein the composition (C) has a total solids content equal to or greater than 90.00 wt. %, relative to the total weight of the composition (C), and wherein the total solids content of the composition (C) is measured according to the standard ASTM D2369 - 20.

2. The composition (C) according to claim 1, wherein the triglyceride oil composition comprises, relative to the total weight of all fatty acid residues in the triglyceride oil composition, from 40.00 to 85.00 wt. % of the at least one fatty acid residue having at least three conjugated double bonds, preferably from 45.00 to 85.00 wt. %, more preferably from 50.00 to 85.00 wt. %, more preferably from 55.00 to 85.00 wt. %, more preferably from 60.00 to 85.00 wt. %, even more preferably from 60.00 to 80.00 wt. %, yet even more preferably from 60.00 to 75.00 wt. %, most preferably from 60.00 to 70.00 wt. %.

3. The composition (C) according to claim 1 or claim 2, wherein the at least one fatty acid residue having at least three conjugated double bonds is a conjugated triene fatty acid residue selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), α-licanic acid (4-oxo-(9*Z*,11*E*,13*E*)-octadeca-9,11,13-trienoic acid or 4-oxo-α-eleostearic acid), jacaric acid ((8*Z*,10*E*,12*Z*)-octadeca-8,10,12-trienoic acid), and catalpic acid ((9*E*,11*E*,13*Z*)-octadeca-9,11,13-trienoic acid); preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12*Z*)-octadeca-8,10,12-trienoic acid), β-calendic acid ((8*E*,10*E*,12*E*)-octadeca-8,10,12-trienoic acid), punicic acid ((9*Z*,11*E*,13*Z*)-octadeca-9,11,13-trienoic acid), and α-licanic acid (4-oxo-(9*Z*,11*E*,13*E*)-octadeca-9,11,13-trienoic acid or 4-oxo-α-eleostearic acid); more preferably selected from the group consisting of fatty acid residues of α-eleostearic acid ((9*Z*,11*E*,13*E*)-octadeca-9,11,13-trienoic acid), β-eleostearic acid ((9*E*,11*E*,13*E*)-octadeca-9,11,13-trienoic acid), α-calendic acid ((8*E*,10*E*,12Z)-octadeca-8,10,12-trienoic acid), and β-calendic acid ((8*E*,10*E*,12*E*)-octadeca-8,10,12-trienoic acid); most preferably selected from fatty acid residues of α-eleostearic acid ((9*Z*,11*E*,13*E*)-octadeca-9,11,13-trienoic acid) or β-eleostearic acid ((9*E*,11*E*,13*E*)-octadeca-9,11,13-trienoic acid).

4. The composition (C) according to any one of claims 1 to 3, wherein the triglyceride oil composition comprises at least one first drying oil, said at least one first drying oil comprising the at least one fatty acid residue having at least three conjugated double bonds, and wherein the at least one first drying oil is selected from the group consisting of tung oil, calendula seed oil, bitter gourd seed oil, pomegranate seed oil, and oiticica oil; preferably selected from the group consisting of tung oil, calendula seed oil, pomegranate seed oil, and oiticica oil; more preferably selected from tung oil, or calendula seed oil; most preferably, the at least one first drying oil is tung oil.

5. The composition (C) according to any one of claims 1 to 4, wherein the triglyceride oil composition further comprises, relative to the total weight of all fatty acid residues in the triglyceride oil composition, from 10.00 to 50.00 wt. % of at least one fatty acid residue having at least two non-conjugated double bonds, wherein the at least two non-conjugated double bonds are separated by a methylene CH₂ group, preferably from 10.00 to 40.00 wt. %, preferably from 11.00 to 35.00 wt. %, more preferably from 12.00 to 30.00 wt. %, even more preferably from 13.00 to 25.00 wt. %, yet even more preferably from 14.00 to 22.00 wt. %.

6. The composition (C) according to claim 5, wherein the at least one fatty acid residue having at least two non-conjugated double bonds, wherein the at least two non-conjugated double bonds are separated by a methylene CH₂ group, is a fatty acid residue having a non-conjugated moiety selected from 1,4-pentadiene or 1,4,7-octatriene and wherein said at least one fatty acid residue is selected from the group consisting of fatty acid residues of linoleic acid ((9*Z*,12*Z*)-octadeca-9,12-dienoic acid), eicosadienoic acid ((11*Z*,14*Z*)-icosa-11,14-dienoic acid), (5*Z*,11*Z*,14*Z*)-icosa-5,11,14-trienoic acid, (7*Z*,10*Z*,13*Z*)-hexadeca-7,10,13-trienoic acid, α-linolenic acid ((9*Z*,12*Z*,15*Z*)-octadeca-9,12,15-trienoic acid), γ-linolenic acid ((6*Z*,9*Z*,12*Z*)-octadeca-6,9,12-trienoic acid), (11*Z*,14*Z*,17*Z*)-icosa-11,14,17-trienoic acid, and (8*Z*,11*Z*,14*Z*)-icosa-8,11,14-trienoic acid; preferably selected from fatty acid residues of linoleic acid ((9*Z*,12*Z*)-octadeca-9,12-dienoic acid), or α-linolenic acid ((9*Z*,12*Z*,15*Z*)-octadeca-9,12,15-trienoic acid).

7. The composition (C) according to claim 5 or claim 6, wherein the triglyceride oil composition further comprises at least one second drying oil, said at least one second drying oil comprising the at least one fatty acid residue having at least two non-conjugated double bonds, wherein the at least two non-conjugated double bonds are separated by a methylene CH₂ group, and wherein the at least one second drying oil is selected from the group consisting of linseed oil, sunflower oil, safflower oil, soybean oil, poppy seed oil, perilla oil, hemp seed oil, cottonseed oil, sesame seed oil, corn oil, flaxseed oil, grape seed oil, walnut oil, chia oil, and camelina oil; preferably selected from the group consisting of linseed oil, sunflower oil, safflower oil, soybean oil, and walnut oil; most preferably, the at least one second drying oil is linseed oil.

8. The composition (C) according to any one of claims 1 to 7, wherein the composition (C) comprises, relative to the total weight of the composition (C), the triglyceride oil composition in an amount from 65.00 to 99.00 wt. %, preferably from 70.00 to 99.00 wt. %, more preferably from 75.00 to 99.00 wt. %, even more preferably from 78.00 to 99.00 wt. %.

9. The composition (C) according to any one of claims 1 to 8, wherein the at least one drying metal-based agent is a metal-based salt wherein the metal cation component is selected from the group consisting of manganese (Mn), iron (Fe), cobalt (Co), zirconium (Zr), and calcium (Ca); wherein the anion component is selected from the group consisting of halides, nitrates, sulphates, acetoacetonates, and carboxylates; and wherein the metal-based salt is optionally complexed with at least one nitrogen donor ligand selected from the group consisting of monodentate, bidentate, tridentate, tetradentate, pentadentate, and hexadentate nitrogen donor ligands.

10. The composition (C) according to any one of claims 1 to 9, wherein the at least one compound (P1) is an aroylphosphine oxide photoinitiator, preferably a non-polymerizable aroylphosphine oxide photoinitiator, more preferably a benzoylphosphine oxide photoinitiator, even more preferably a non-polymerizable benzoylphosphine oxide photoinitiator.

11. The composition (C) according to any one of claims 1 to 10, wherein the at least one compound (P1) is selected from the group consisting of diphenyl(2,4,6-trimethylbenzoyl)phosphine oxide; bis(4-methylphenyl)(2,4,6-trimethylbenzoyl)phosphine oxide; ethyl(2,4,6-trimethylbenzoyl)phenylphosphinate; phenylbis(2,4,6-trimethylbenzoyl)phosphine oxide; bis(2,6-dimethoxybenzoyl)(2,4,4-trimethylpentyl)phosphine oxide; bis(2,6-dimethylbenzoyl)(2,4,4-trimethylpentyl)phosphine oxide; and bis(2,4,6-trimethylbenzoyl)(2,4-dipentyloxyphenyl)phosphine oxide; preferably selected from the group consisting of bis(4-methylphenyl)(2,4,6-trimethylbenzoyl)phosphine oxide; phenylbis(2,4,6-trimethylbenzoyl)phosphine oxide; and bis(2,6-dimethylbenzoyl)(2,4,4-trimethylpentyl)phosphine oxide; more preferably selected from bis(4-methylphenyl)(2,4,6-trimethylbenzoyl)phosphine oxide; or phenylbis(2,4,6-trimethylbenzoyl)phosphine oxide.

12. The composition (C) according to any one of claims 1 to 11, wherein the composition (C) comprises, relative to the total weight of the composition (C), the at least one compound (P1) in an amount from 0.60 to 8.00 wt. %, preferably in an amount from 0.70 to 6.00 wt. %, more preferably in an amount from 0.80 to 4.00 wt. %, even more preferably in an amount from 0.90 to 3.00 wt. %.

13. The composition (C) according to any one of claims 1 to 12, wherein the at least one compound (P2) according to general Formula (I_{P2}) or according to general Formula (II_{P2}) is selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-4'-isopropyl-2-methylpropiophenone; 2-hydroxy-2,3',4'-trimethylpropiophenone; 2-hydroxy-1-(4-methoxyphenyl)-2-methyl-1-propanone; 2-ethyl-2-hydroxy-4'-methylhexanophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one; preferably selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-4'-isopropyl-2-methylpropiophenone; 2-hydroxy-2,3',4'-trimethylpropiophenone; 2-hydroxy-1-(4-methoxyphenyl)-2-methyl-1-propanone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one; more preferably selected from the group consisting of 2-hydroxy-2-methylpropiophenone; 1-hydroxycyclohexyl phenyl ketone; 2-hydroxy-4'-(2-hydroxyethoxy)-2-methylpropiophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one; even more preferably selected from the group consisting of 2-hydroxy-2-methylpropiophenone; 2-hydroxy-1-[4-[4-(2-hydroxy-2-methylpropanoyl)phenoxy]phenyl]-2-methylpropan-1-one; and 2-hydroxy-1-(4-(4-(2-hydroxy-2-methylpropionyl)benzyl)phenyl)-2-methylpropan-1-one.

14. The composition (C) according to any one of claims 1 to 13, wherein the at least one compound (P2) according to general Formula (I_{P2}) or according to general Formula (II_{P2}) is 2-hydroxy-2-methylpropiophenone.

15. The composition (C) according to any one of claims 1 to 14, wherein the weight ratio of compound (P2) to compound (P1) ranges from 0.6 to 9.0, preferably from 0.7 to 8.0, more preferably from 0.8 to 7.0, even more preferably from 0.9 to 6.0.

16. The composition (C) according to any one of claims 1 to 15, wherein the composition (C) has a total solids content equal to or greater than 92.50 wt. %, preferably equal to or greater than 95.00 wt. %, more preferably equal to or greater than 97.00 wt. %, even more preferably equal to or greater than 99.00 wt. %, wherein all wt. % are relative to the total weight of the composition (C), and wherein the total solids content of the composition (C) is measured according to the standard ASTM D2369 - 20.

17. A method for the manufacturing of the composition (C) according to any one of claims 1 to 16, wherein the method comprises the steps of intimate admixing:
- from 60.00 to 99.00 % wt. % of the triglyceride oil composition;
- from 0.01 to 2.00 wt. % of the at least one metal-based drying agent;
- from 0.50 to 10.00 wt. % of the at least one compound (P1);
- the at least one compound (P2) according to general Formula (I_{P2}) or according to general Formula (II_{P2}), wherein the compound (P2) is present in an amount as determined by a weight ratio of compound (P2) to compound (P1) ranging from 0.5 to 10.0;
wherein all wt. % are relative to the total weight of the composition (C).

18. A method of treating a surface or at least part of a surface of a wood product wherein said wood product is treated with the composition (C) according to any one of claims 1 to 16.

19. A coated layer obtained by the method according to claim 18.
